(19) Europäisches Patentamt
European Patent Office
Office européen des brevets

(11) **EP 4 372 948 B1**

(12) **EUROPEAN PATENT SPECIFICATION**

(45) Date of publication and mention
of the grant of the patent:
**14.05.2025  Bulletin 2025/20**

(21) Application number: **22208077.2**

(22) Date of filing: **17.11.2022**

(51) International Patent Classification (IPC):
$H02J\ 3/38$ $^{(2006.01)}$         $H02J\ 3/00$ $^{(2006.01)}$

(52) Cooperative Patent Classification (CPC):
**H02J 3/381; H02J 3/004;** H02J 2203/20

(54) **COMPUTER-IMPLEMENTED METHOD, COMPUTER-IMPLEMENTED TOOL AND POWER PLANT CONTROL DEVICE FOR ENERGY BALANCING SOLAR POWER PLANTS AND A SOLAR POWER PLANT SYSTEM**

COMPUTERIMPLEMENTIERTES VERFAHREN, COMPUTERIMPLEMENTIERTES WERKZEUG UND KRAFTWERKSSTEUERUNGSVORRICHTUNG ZUM ENERGIEAUSGLEICH VON SOLARKRAFTWERKEN UND SOLARKRAFTWERKSSYSTEM

PROCÉDÉ MIS EN OEUVRE PAR ORDINATEUR, OUTIL MIS EN OEUVRE PAR ORDINATEUR ET DISPOSITIF DE COMMANDE DE CENTRALE ÉLECTRIQUE POUR CENTRALES SOLAIRES À ÉQUILIBRAGE D'ÉNERGIE ET SYSTÈME DE CENTRALE SOLAIRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**22.05.2024  Bulletin 2024/21**

(73) Proprietor: **Siemens Aktiengesellschaft**
**80333 München (DE)**

(72) Inventors:
• **Bamberger, Joachim**
**82131 Stockdorf (DE)**
• **Mesanovic, Amer**
**80997 München (DE)**
• **Szabo, Andrei**
**85521 Ottobrunn (DE)**

(74) Representative: **Siemens Patent Attorneys**
**Postfach 22 16 34**
**80506 München (DE)**

(56) References cited:
**CN-B- 112 531 694        US-A1- 2018 073 980**
**US-A1- 2020 186 083**

**Description**

The invention refers to a computer-implemented method for energy balancing solar power plants according to the preamble of claim 1, a computer-implemented tool for energy balancing solar power plants according to the preamble of claim 6, a power plant control device for energy balancing solar power plants according to the preamble of claim 11 and a solar power plant system according to the preamble of claim 12.

When operating solar power plants there are many reasons for power losses in the solar power plants by <i> "Photo-Voltaic <PV>" generators, such as failures of components such as inverters, PV strings, measurement devices etc., <ii> curtailment with a controlled reduction of solar power production, <iii> clipping when a "Direct Current <DC>" power output of the PV strings is higher than the inverter power rating) or <iv> shading etc.

For this reason it is useful to quantify how much electrical energy, which means how much money, would be lost due to a reduced power output of a solar power plant. This enables an adjustment of a solar power plant control, an adaption of maintenance activity etc.

Up to now, this quantification problem was solved by manual observation of solar power plant production values and comparison with production values in previous months and/or years.

It is an objective of the invention to propose a computer-implemented method, a computer-implemented tool and a power plant control device for energy balancing solar power plants as well as a solar power plant system, by which energy losses of the solar power plants are determined and reliably quantified so that their impacts on energy outputs of the solar power plants could be reduced.

This objective is solved based on a computer-implemented method defined in the preamble of claim 1 by the features in the characterizing part of claim 1.

The objective is further solved based on a computer-implemented tool defined in the preamble of claim 6 by the features in the characterizing part of claim 6.

The objective is solved furthermore based on a power plant control device defined in the preamble of claim 11 by the features in the characterizing part of claim 11.

The objective is solved moreover based on a solar power plant system defined in the preamble of claim 12 by the features in the characterizing part of claim 12.

The main idea of the invention according to the claims 1, 6, 11 and 12 in order to do an energy balancing of solar power plants, when for an energy accounting time period of a solar power plant, in which over a recording time "$[t_0$ to $t_n]$" with $n \in \mathbb{N}_0$ corresponding to the energy accounting time period, regarding an irradiation by measuring an irradiation measurement signal "$I(t)$", a set of irradiation measurement values "$I(t_0)$" to "$I(t_n)$" and, regarding a generated power by measuring a power production measurement signal "$P(t)$" a set of power production measurement values "$P(t_0)$" to "$P(t_n)$" are collected, is to

- match for the recording time "$[t_0$ to $t_n]$" the power production measurement signal "$P(t)$" to the irradiation measurement signal "$I(t)$" by using a curve matching algorithm to identify based on the set of power production measurement values "$P(t_0)$" to "$P(t_n)$" and the set of irradiation measurement values "$I(t_0)$" to "$I(t_n)$" being collected at least one good matching time, in which the power production measurement signal "$P(t)$" and the irradiation measurement signal "$I(t)$" match optimally through a minimum signal distance,
- run a fitting algorithm, in particular a robust least squares fit algorithm, for the at least one good matching time and based <i> regarding a "good matching time"-related part of the power production measurement signal "$P_{GMT}(t)$" (PPMS$_{GMT}$) on a subset of the set of power production measurement values "$P_i(t_0)$" to "$P_i(t_n)$" and <ii> regarding a "good matching time"-related part of the irradiation measurement signal "$I_{GMT}(t)$" on a subset of the set of irradiation measurement values "$I(t_0)$" to "$I(t_n)$" (SIMV$_{SS}$) to generate according to an estimated power production measurement signal "$P_{est}(t, K)$" defined as a function "$f(I(t),K)$" with "$P_{est}(t, K)=f(I(t), K=[k_0, k_1, ...])$" a parameter set "K" with at least one parameter "$[k_0, k_1, ...]$", in which when running the fitting algorithm a deviation between the power production measurement signal "$P(t)$" and the estimated power production measurement signal "Pest(t, K)" is minimized by tuning or changing the parameter set "K",
- calculate for the recording time "$[t_0$ to $t_n]$" based on <1> the set of power production measurement values "$P(t_0)$" to "$P(t_n)$", <2> the set of irradiation measurement values "$I(t_0)$" to "$I(t_n)$" (SIMV) and <3> the generated parameter set "K" with the at least one parameter "$[k_0, k_1, ...]$" the estimated power production measurement signal "$P_{est}(t, K)$" in order to determine a value for an energy loss by an integral calculation of a power difference

$$\int [P_{est}(t, K) - P(t)] \, dt.$$

Further advantages arise out of additional developments of the invention according to the independent claims.

I. So, according to the claims 2 and 7 the curve matching algorithm to identify the at least one good matching time is preferably iterative based, in which following primary steps $"S1_p"$ to $"S6_p"$ of the curve matching algorithm are carried out, wherein the steps $"S3_p"$ to $"S5_p"$ are done iteratively.

In a first primary step $"S1_p"$ the power production measurement signal "P(t)" with the set of power production measurement values "P($t_0$)" to "P($t_n$)" and the irradiation measurement signal "I(t)" with the set of irradiation measurement values "I($t_0$)" to "I($t_n$)" are fed to the curve matching algorithm.

In a next second primary step $"S2_p"$ a candidate set for good matching to the recording time "[$t_0$ to $t_n$]" are set.

In a further third primary step $"S3_p"$ a scaling factor "s" by solving a first optimization problem to

$$\min_{s} \sum_{t \in candidate\ set} (P(t) - sI(t))^2$$

is calculated.

Then, in a fourth primary step $"S4_p"$ time points from the candidate set for good matching are included, wherein all of the following criteria between a "P(t)"-value and a "sI(t)"-value for "t" in the recording time "[$t_0$ to $t_n$]" are satisfied

- A deviation between the values is smaller than a first threshold value
- A difference of variabilities of the values is smaller than a second threshold value.

Moreover, in a fifth primary step $"S5_p"$ following the mentioned iteration it is going back to the third primary step $"S3_p"$ until the candidate set for good matching ($CS_{GM}$) remains unchanged according to the fourth primary step $"S4_p"$.

Finally, in a sixth primary step $"S6_p"$ the at least one good matching time corresponding to the candidate set is outputted after the last iteration of the fifth primary step $"S5_p"$.

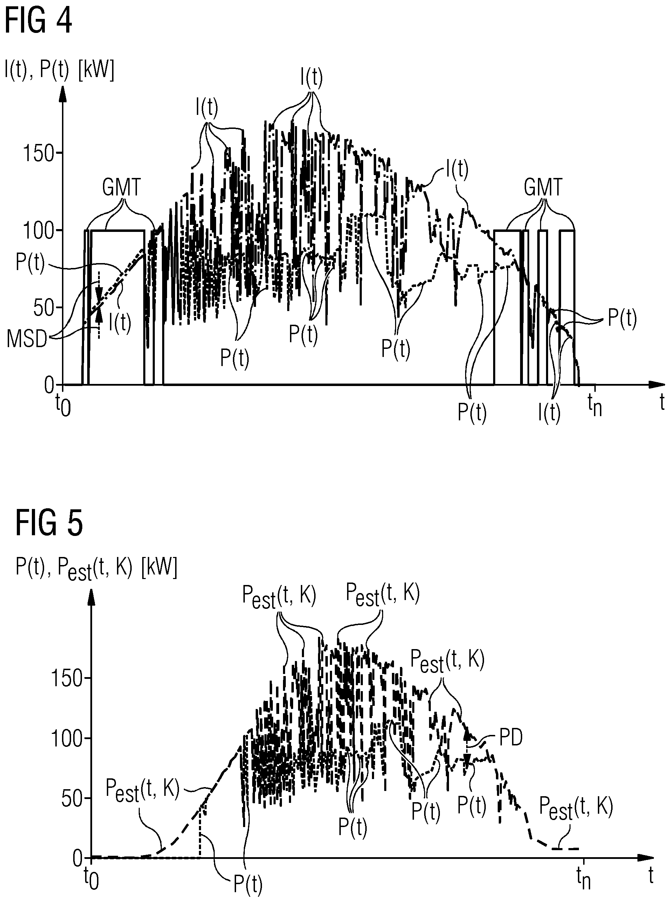

The result of this iterative approach is depicted in FIGURE 4.

II. So, according to the claims 3 and 8 the fitting algorithm is preferably a robust least squares fit algorithm to generate the parameter set **"K"** with the at least one parameter "[$k_0$, $k_1$, ...]" is preferably also iterative based, in which following secondary steps $"S1_s"$ to $"S5_s"$ of the robust least squares fit algorithm are carried out, wherein the steps $"S2_s"$ to $"S4_s"$ are done iteratively.

In a first secondary step $"S1_s"$ the "good matching time"-related part of the power production measurement signal "$P_{GMT}$(t)" with the subset of the set of power production measurement values "P($t_0$)" to "P($t_n$)" and the "good matching time"-related part of the irradiation measurement signal "$I_{GMT}$(t)" on the subset of the set of irradiation measurement values "I($t_0$)" to "I($t_n$)" are fed into the robust least squares fit algorithm.

In a next second secondary step $"S2_s"$ a further parameter set **"K\*"** by solving a second optimization problem to

$$K^* = \underset{K^*}{\arg\min} \sum_{t \in good\ matching\ times} (P(t) - P_{est}(t, K^*))^2$$

is calculated, wherein $P_{est}$ is a function of time "t" and the further parameter set "K\*" with $P_{est}$ (t, $K^*$)=f(I(t), $K^*$)".

In a further third secondary step $"S3_s"$ the further parameter set **"K\*"** is used to calculate a set of quadratic deviations as **[(P(t) - $P_{est}$(t,K\*))$^2$ ... ]** for all "t$\in$ good matching times". Then also in this third secondary step $"S3_s"$ a percentage share of the times, e.g. 10%, from the good matching times corresponding to the highest values in the set of quadratic deviations are eliminated.

Moreover, in a fourth secondary step $"S4_s"$ following the mentioned iteration it is going back to the second secondary step $"S2_s"$ until a specified number of iterations, e.g., 3 iterations, is achieved.

Finally, in a fifth secondary step $"S5_s"$ the parameter set "K" corresponding to the further parameter set "K\*" is outputted after the last iteration of the fourth secondary step $"S4_s"$.

The result of this iterative approach is depicted in FIGURE 5.

III. So, according to the claims 4 and 9 the function "f(I(t),K)" with K=[$k_0$, $k_1$, ...] the estimated power production measurement signal "$P_{est}$(t, K)" is calculated by is preferably a linear function "$P_{est}$(t, $k_0$)= I(t)" or a quadratic function "$P_{est}$ (t, $k_0$, $k_1$)= $k_0$ I(t) + $k_1$ I(t)$^2$".

IV. So, according to the claims 5 and 10 it is beneficial that a control information is generated and used to control reductions of impacts concerning the calculated energy loss on the solar power plant.

Moreover, advantageous further developments of the invention arise out of the following description of a preferred embodiment of the invention according to FIGURES 1 to 5. They show:

FIGURE 1 a solar power plant system for energy balancing solar power plants as an "implementation-concept",

FIGURE 2 a solar power plant system for energy balancing solar power plants as a "functional-unit-concept",

FIGURE 3 a flowchart of a process to determine an energy loss in the course of energy balancing solar power plants,

FIGURE 4 a visualizing chart depicting an irradiation measurement signal "I(t)" and a power production measurement signal "P(t)",

FIGURE 5 a visualizing chart depicting a power production measurement signal "P(t)" and an estimated power production measurement signal "$P_{est}(t, K)$".

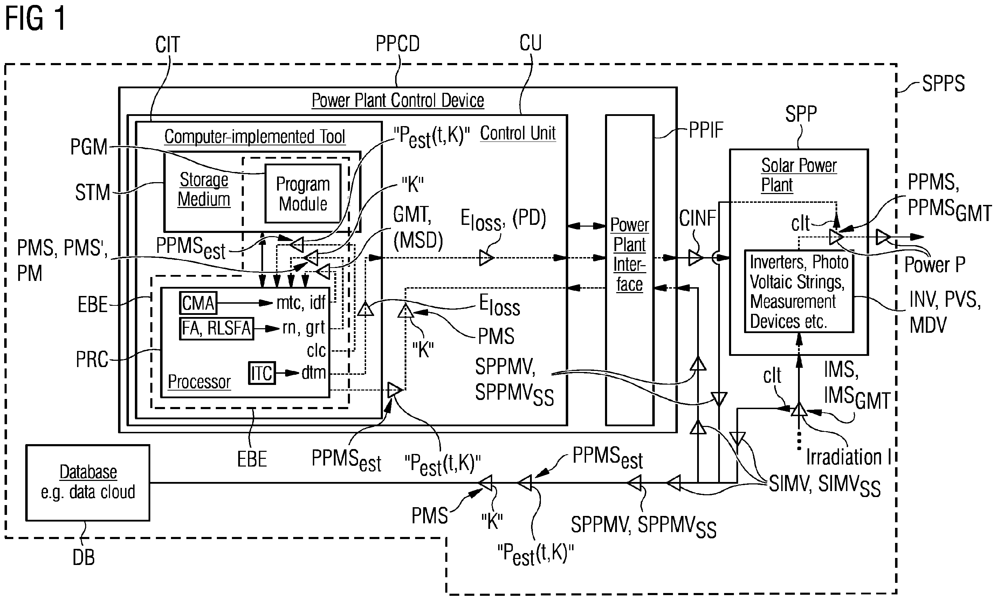

FIGURE 1 shows a solar power plant system SPPS for energy balancing a solar power plant SPP including various components such as inverters INV, "Photo-Voltaic <PV>" generators preferably designed as PV strings PVS and measurement devices etc., as an "implementation-concept". When operating the solar power plant SPP and at least one the these component fails during operation this is reflected in a drop of performance concerning a generated power P of the solar power plant SPP from an irradiation I which is hitting the solar power plant SPP and preferably at least one of a "Global Horizontal Irradiance <GHI>" and a "Plan Of Array Irradiance <POA Irradiance>".

The drop of performance corresponds when cumulated over a time frame in a loss of energy. As stated in the beginning of the present application there are more reasons for such energy losses, which are useful to be quantified in the course of energy balancing the solar power plant SPP.

The depicted solar power plant system SPPS includes, besides the solar power plant SPP with the cited components INV, PVS, MDV as a central component for energy balancing the solar power plant SPP a power plant control device PPCD and moreover a database DB, which is preferably designed as a data cloud.

One of the usual goals of the power plant control device PPCD is to enable a requested output, e.g. by an electrical consumer being connectable to the solar power plant SPP, of the generated power P. For this goal and the cited purposes the power plant control device PPCD includes a control unit CU and a power plant interface PPIF, wherein the corresponding control of the solar power plant SPP is carried out by the control unit CU via the power plant interface PPIF.

Furthermore in the context of the balancing task of the solar power plant system SPPS the power plant control device PPCD with the cited two components, the control unit CU and the power plant interface PPIF, is also responsible for energy balancing the solar power plant SPP. Therefore, according to the "implementation-concept" depicted in the FIGURE 1 the control unit CU includes a computer-implemented tool CIT which is implemented as a sub-unit in the control unit CU. The computer-implemented tool CIT is a computer-program-product which is preferably designed as an application software, called as APP, that allows, when it is implemented, to perform special tasks. So, in the present case of the control unit CU, where the computer-program-product respectively the APP is implemented, the computer-implemented tool CIT is used for energy balancing the solar power plant SPP.

To this end the computer-implemented tool CIT comprises a non-transitory, processor-readable storage medium STM, in which processor-readable program-instructions of a program module PGM are stored. This program module PGM is used for energy balancing the solar power plant SPP. Moreover the computer-implemented tool CIT comprises a processor PRC connected with the storage medium STM executing the processor-readable program-instructions of the program module PGM to energy balance the solar power plant SPP, wherein the program module PGM and the processor PRC form an energy balancing engine EBE for doing this energy balancing.

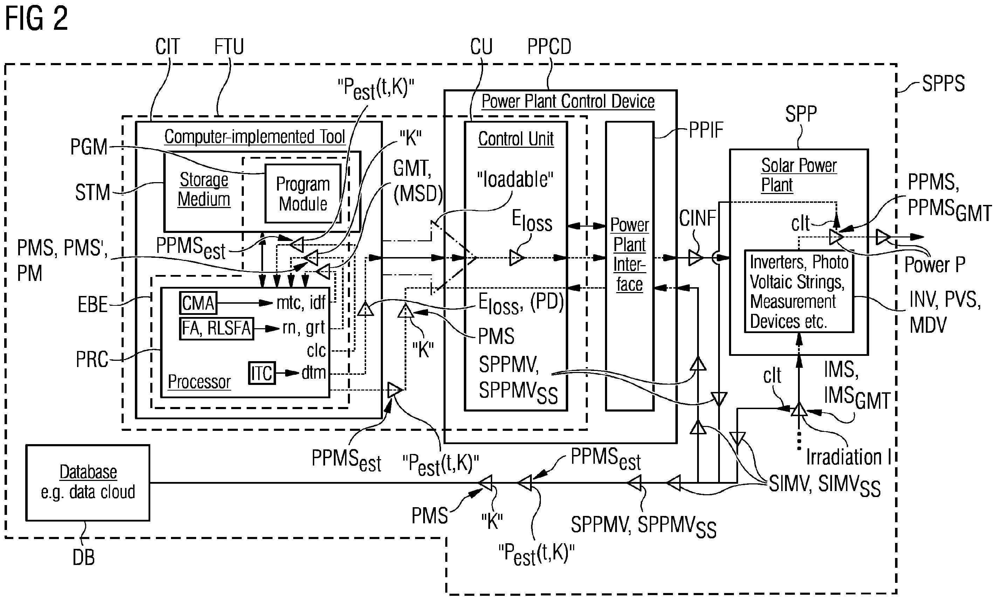

FIGURE 2 shows a solar power plant system SPPS for energy balancing a solar power plant SPP including various components such as inverters INV, "Photo-Voltaic <PV>" generators preferably designed as PV strings PVS and measurement devices etc., as a "functional-unit-concept". Again when operating the solar power plant SPP and at least one the these component fails during operation this is reflected in a drop of performance concerning a generated power P of the solar power plant SPP from an irradiation I which is hitting the solar power plant SPP and preferably at least one of a "Global Horizontal Irradiance <GHI>" and a "Plan Of Array Irradiance <POA Irradiance>".

The drop of performance corresponds again when cumulated over a time frame in a loss of energy. As stated in the beginning of the present application there are more reasons for such energy losses, which are useful to be quantified in the course of energy balancing the solar power plant SPP.

The depicted solar power plant system SPPS includes again, besides the solar power plant SPP with the cited components INV, PVS, MDV as a central component for energy balancing the solar power plant SPP a power plant control device PPCD and moreover a database DB, which is preferably designed as a data cloud.

Again one of the usual goals of the power plant control device PPCD is to enable a requested output, e.g. by an electrical consumer being connectable to the solar power plant SPP, of the generated power P. For this goal and the cited purposes the power plant control device PPCD includes a control unit CU and a power plant interface PPIF, wherein the corresponding control of the solar power plant SPP is carried out by the control unit CU via the power plant interface PPIF.

Furthermore in the context of the balancing task of the solar power plant system SPPS the power plant control device PPCD with the cited two components, the control unit CU and the power plant interface PPIF, is again also responsible for energy balancing the solar power plant SPP. Therefore, according to the "functional-unit-concept" depicted in the FIGURE 2 the control unit CU does not include the computer-implemented tool CIT. Instead, the Computer-implemented tool CIT forms a functional unit FTU with the control unit CU. This functional unit FTU is preferably designed such that the Computer-implemented tool CIT is either loadable into the control unit CU according to the depiction in the FIGURE 2 or forms either (not depicted in the FIGURE 2) a cloud-based, centralized platform, e.g. a server, for the power plant control device PPCD or a decentralized platform, e.g. a server, for the power plant control device PPCD with a mutual access within the functional unit between the control unit CU and the Computer-implemented tool CIT.

In each of cited variants of realization the computer-implemented tool CIT is again a computer-program-product which in the case upload-functionality is again preferably designed as an application software, called as APP, that allows, when it is implemented, to perform special tasks. So, in the present case of the control unit CU, when the computer-program-product respectively the APP is uploaded, the power plant control device PPCD with uploaded computer-implemented tool CIT is used for detecting the power production degradation of the solar power plant SPP.

To this end the computer-implemented tool CIT comprises again a non-transitory, processor-readable storage medium STM, in which processor-readable program-instructions of a program module PGM are stored. This program module PGM is used for energy balancing the solar power plant SPP. Moreover the computer-implemented tool CIT comprises again a processor PRC connected with the storage medium STM executing the processor-readable program-instructions of the program module PGM to energy balance the solar power plant SPP, wherein the program module PGM and the processor PRC form again an energy balancing engine EBE for doing this energy balancing.

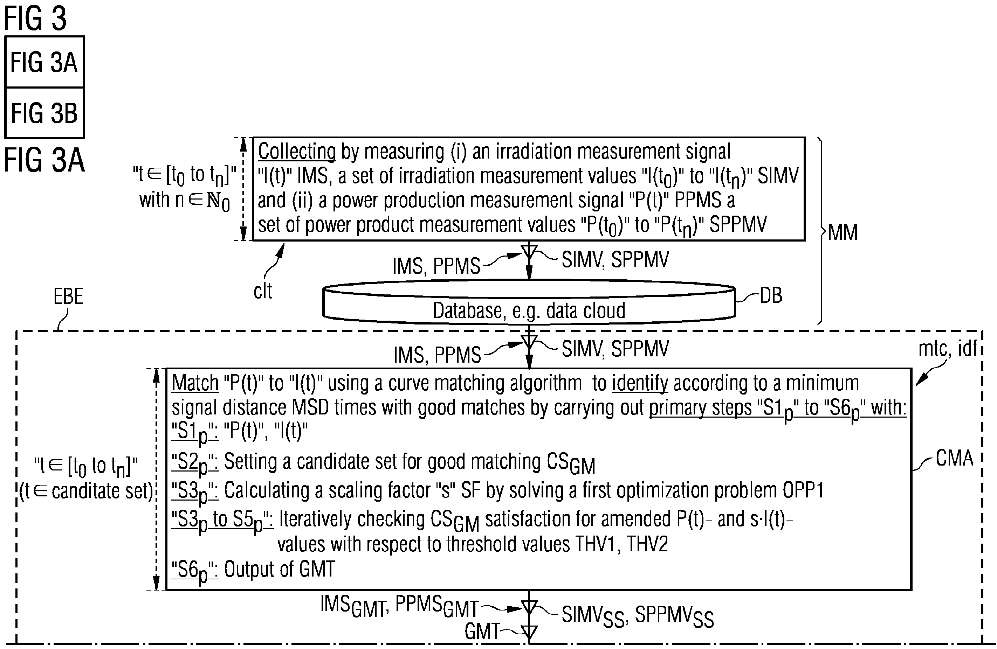

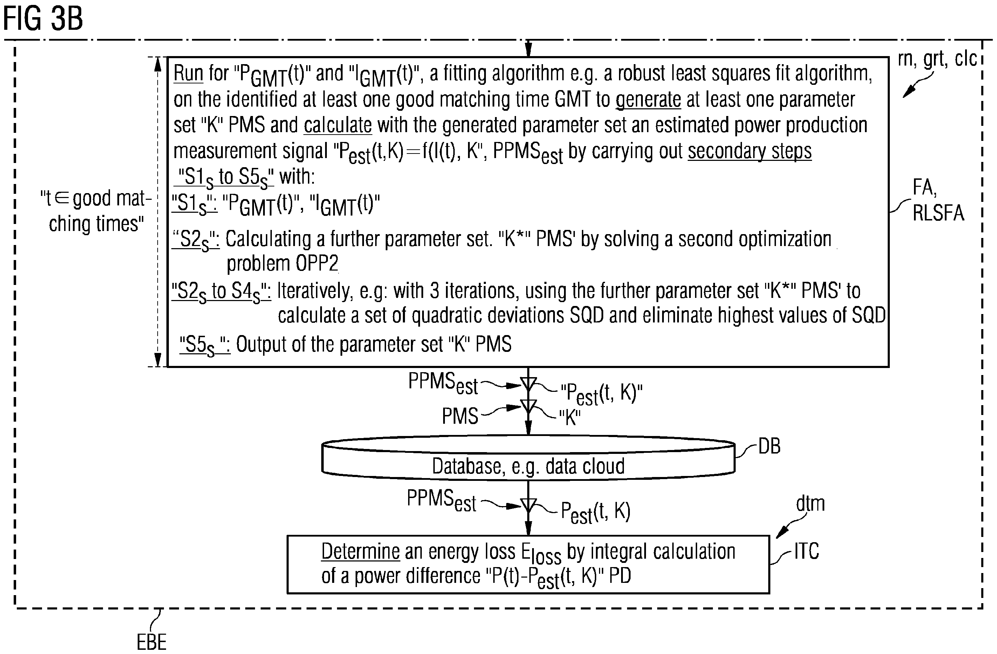

The energy balancing for both concepts, the "implementation-concept" and the "functional-unit-concept" is generally based on various measurements MM (cf. FIGURE 3). The measurements take place over a recording or measurement time "[$t_0$ to $t_n$]" with $n \in \mathbb{N}_0$ corresponding to an energy accounting time period EATP, which could be for example one day with a one hour based recording time "[$t_0$=0h to $t_{23}$=23h]". For this recording or measurement time "[$t_0$ to $t_n$]" respectively the energy accounting time period EATP there are collected clt

(i) - by measuring regarding the irradiation I, which is preferably based on a measured plane-of-array irradiation, an irradiation measurement signal "I(t)" IMS - a set of irradiation measurement values "I($t_0$)" to "I($t_n$)" SIMV and

(ii) - by measuring regarding the generated power P, which is preferably based on a measured power of the complete solar power plant SPP, INV, PVS, MDV or at least one part of the cited solar power plant components such as the inverter INV, the "Photo-Voltaic <PV>"-string PVS or the measurement device MDV, a power production measurement signal "P(t)" PPMS - a set of power production measurement values "P($t_0$)" to "P($t_n$)" SPPMV.

<u>Remark</u>: If according to (i) above the "Global Horizontal Irradiance <GHI>" or any other diffuse irradiation can be measured, the irradiation measurement values could be transformed with state-of-the-art methods to the plane-of-array measurements.

When the measurement signals IMS, PMS with the corresponding measured values SIMV, SPPMV are measured independently or time shifted from the energy balancing process itself, they can be stored meanwhile or intermediately in the database DB before they are inputted into, supplied to or retrieved from the processor PRC via the power plant interface PPIF and the control unit CU. Otherwise they are inputted directly into, supplied directly to or retrieved directly from the processor PRC via the power plant interface PPIF and the control unit CU.

For doing now based on the described measurements MM (cf. FIGURE 3) the cited energy balancing of the solar power plant SPP - according to a flowchart of a process to determine an energy loss in the course of energy balancing solar power plants in FIGURE 3 - the energy balancing engine EBE formed by the processor PRC and the program module PGM are doing the following:

**(1)** Matching mtc for the recording time "[$t_0$ to $t_n$]" the power production measurement signal "P(t)" PPMS to the irradiation measurement signal "I(t)" IMS by using a curve matching algorithm CMA (cf. FIGURE 3) to identify idf based on the set of power production measurement values "P($t_0$)" to "P($t_n$)" SPPMV and the set of irradiation measurement values "I($t_0$)" to "I($t_n$)" SIMV being collected clt at least one good matching time GMT, in which the power production measurement signal "P(t)" PPMS and the irradiation measurement signal "I(t)" IMS match optimally through a minimum signal distance MSD (cf. FIGUR 4).

**(2)** Running rn a fitting algorithm FA, e.g., preferably a robust least squares fit algorithm RLSFA, (cf. FIGURE 3) for the at least one good matching time GMT and based **<1>** regarding a "good matching time"-related part of the power production measurement signal "$P_{GMT}$(t)" $PPMS_{GMT}$ on a subset of the set of power production measurement values "$P_i(t_0)$" to "$P_i(t_n)$" $SPPMV_{SS}$ and **<2>** regarding a "good matching time"-related part of the irradiation measurement signal "$I_{GMT}$(t)" $IMS_{CMT}$ on a subset of the set of irradiation measurement values "I($t_0$)" to "I($t_n$)" $SIMV_{SS}$ to generate grt

according to an estimated power production measurement signal "$P_{est}(t, K)$" PPMS$_{est}$ defined as a function "$f(I(t),K)$" with "$P_{est}$ (t, K)=f(I(t), K=[k0, k1, ...])$ a parameter set "K" (PMS) with at least one parameter "$[k_0, k_1, ...]$" PM, in which when running rn the fitting algorithm FA a deviation between the power production measurement signal "$P(t)$" PPMS and the estimated power production measurement signal "$P_{est}(t, K)$" PPMS$_{est}$ is minimized by tuning or changing the parameter set "K" PMS.

(3) Calculating clc for the recording time "$[t_0$ to $t_n]$" based on **<a>** the set of power production measurement values "$P(t_0)$" to "$P(t_n)$" SPPMV, **<b>** the set of irradiation measurement values "$I(t_0)$" to "$I(t_n)$" SIMV and **<c>** the generated parameter set "K" PMS with the at least one parameter "$[k_0, k_1, ...]$" PM the estimated power production measurement signal "$P_{est}(t, K)$" PPMS$_{est}$ in order to determine dtm a value for an energy loss $E_{loss}$ by an integral calculation ITC (cf. FIGURE 3) of a power difference PD (cf. FIGURE 5)

$$\int [P(t, K) - P_{est}(t, K)]\, dt.$$

According to FIGURE 3 both parameter set "K" PMS and the estimated power production measurement signal "$P_{est}(t, K)$" PPMS$_{est}$ can be stored preferably in the database DB.

The cited function "$f(I(t),K)$" with $K=[k_0, k_1, ...]$ the estimated power production measurement signal "$P_{est}(t, K)$" PPMS$_{est}$ is calculated by is preferably a linear function "$P_{est}(t, k_0)= I(t)$" or a quadratic function "$P_{est}(t, k_0, k_1)= k_0\, I(t) + k_1\, I(t)^2$".

Besides that it is beneficial when the energy balancing engine EBE formed by the processor PRC and the program module PGM is designed such that a control information CINF is generated and used to control reductions of impacts concerning the calculated energy loss $E_{loss}$ on the solar power plant SPP.

Moreover - according to the flowchart of the process to determine the energy loss in the course of energy balancing solar power plants in the FIGURE 3 - for extending the cited energy balancing of the solar power plant SPP the energy balancing engine EBE formed by the processor PRC and the program module PGM is designed advantageously such that the curve matching algorithm CMA (cf. FIGURE 3) to identify idf the at least one good matching time GMT is preferably iterative based, in which following primary steps **"S1$_p$" to "S6$_p$"** of the curve matching algorithm CMA (cf. FIGURE 3) are carried out, wherein the steps **"S3$_p$" to "S5$_p$"** are done iteratively.

In a first primary step **"S1$_p$"** the power production measurement signal "$P(t)$" PPMS with the set of power production measurement values "$P(t_0)$" to "$P(t_n)$" SPPMV and the irradiation measurement signal "$I(t)$" IMS with the set of irradiation measurement values "$I(t_0)$" to "$I(t_n)$" SIMV are fed to the curve matching algorithm CMA (cf. FIGURE 3).

In a next second primary step **"S2$_p$"** a candidate set CS$_{GM}$ for good matching to the recording time "$[t_0$ to $t_n]$" are set.

In a further third primary step **"S3$_p$"** a scaling factor "s" SF by solving a first optimization problem OPP1 to

$$\min_{s} \sum_{t \in candidate\ set} (P(t) - sI(t))^2$$

is calculated.

Then, in a fourth primary step **"S4$_p$"** time points from the candidate set for good matching CS$_{GM}$ are included, wherein all of the following criteria between a "$P(t)$"-value and a "$sI(t)$"-value for "t" in the recording time "$[t_0$ to $t_n]$" are satisfied

- A deviation between the values is smaller than a first threshold value THV1
- A difference of variabilities of the values is smaller than a second threshold value THV2.

Moreover, in a fifth primary step **"S5$_p$"** following the mentioned iteration it is going back to the third primary step **"S3$_p$"** until the candidate set for good matching (CS$_{GM}$) remains unchanged according to the fourth primary step **"S4$_p$"**.

Finally, in a sixth primary step **"S6$_p$"** the at least one good matching time GMT corresponding to the candidate set CS$_{GM}$ is outputted after the last iteration of the fifth primary step **"S5$_p$"**.

The result of this iterative approach is depicted in FIGUR 4.

Furthermore - again according to the flowchart of the process to determine the energy loss in the course of energy balancing solar power plants in the FIGURE 3 - for extending the cited energy balancing of the solar power plant SPP the energy balancing engine EBE formed by the processor PRC and the program module PGM is designed advantageously such that the robust least squares fit algorithm RLSFA (cf. FIGURE 3) as an advantageous form of the fitting algorithm FA to generate grt the parameter set "K" PMS with the at least one parameter "$[k_0, k_1, ...]$" PM is preferably also iterative based, in which following secondary steps **"S1$_s$" to "S5$_s$"** of the robust least squares fit algorithm RLFSA (cf. FIGURE 3) are carried out, wherein the steps **"S2$_s$" to "S4$_s$"** are done iteratively.

In a first secondary step **"S1$_s$"** the "good matching time"-related part of the power production measurement signal "P$_{GMT}$(t)" PPMS$_{GMT}$ with the subset of the set of power production measurement values "P(t$_0$)" to "P(t$_n$)" SPPMV$_{SS}$ and the "good matching time"-related part of the irradiation measurement signal "I$_{GMT}$(t)" IMS$_{GMT}$ on the subset of the set of irradiation measurement values "I(t$_0$)" to "I(t$_n$)" SIMV$_{SS}$ are fed into the robust least squares fit algorithm RLSFA (cf. FIGURE 3).

In a next second secondary step **"S2$_s$"** a further parameter set **"K*"** PMS' by solving a second optimization problem OPP2 to

$$K^* = \underset{K^*}{\mathrm{argmin}} \sum_{t \,\in\, good\ matching\ times} (P(t) - P_{est}(t, K^*))^2$$

is calculated, wherein P$_{est}$ is a function of time "t" and the further parameter set "K*" PMS' with P$_{est}$(t, *K**)=f(I(t), *K**)".

In a further third secondary step **"S3$_s$"** the further parameter set **"K*"** PMS' is used to calculate a set of quadratic deviations SQD as **[(P(t) - P$_{est}$(t,K*))$^2$ ... ]** for all "t$\in$ good matching times". Then also in this third secondary step **"S3$_s$"** a percentage share of the times, e.g. 10%, from the good matching times corresponding to the highest values in the set of quadratic deviations SQD are eliminated.

Moreover, in a fourth secondary step **"S4$_s$"** following the mentioned iteration it is going back to the second secondary step **"S2$_s$"** until a specified number of iterations, e.g., 3 iterations, is achieved.

Finally, in a fifth secondary step **"S5$_s$"** the parameter set "K" PMS corresponding to the further parameter set **"K*"** PMS' is outputted after the last iteration of the fourth secondary step **"S4$_s$".**

The result of this iterative approach is depicted in FIGUR 5.

Alternatively, instead of using the latest parameter set "K" PMS from the fourth secondary step **"S4$_s$"** a historical parameter set "K" may be used to screen for partial failures of the component. If historical parameter set "K" jumped to lower values and remained at such low values until to the robust least squares fit algorithm evaluation, this means that a partial failure is present in the solar power plant during the robust least squares fit algorithm evaluation. In this case, the last parameter set "K" before the jump should be used to also estimate the energy losses due to constant partial failures, as well as intermittent failures.

## Claims

1. Computer-implemented method for energy balancing solar power plants, by collecting (clt) for an energy accounting time period (EATP) of a solar power plant (SPP, INV, PVS, MDV), in which in which over a recording time "[t$_0$ to t$_n$]" with $n \in \mathbb{N}_0$ corresponding to the energy accounting time period (EATP), <i> regarding an irradiation (I), in particular being based on a measured plane-of-array irradiation, by measuring an irradiation measurement signal "I(t)" (IMS), a set of irradiation measurement values "I(t$_0$)" to "I(t$_n$)" (SIMV) and **<ii>** regarding a generated power (P), in particular being based on a measured power of the complete solar power plant (SPP, INV, PVS, MDV) or at least one part of the solar power plant (INV, PVS, MDV) such as an inverter, a "Photo-Voltaic <PV>"-string or a measurement device, by measuring a power production measurement signal "P(t)" (PPMS) a set of power production measurement values "P(t$_0$)" to "P(t$_n$)" (SPPMV),
   **characterized by**:

   **a)** matching (mtc) for the recording time "[t$_0$ to t$_n$]" the power production measurement signal "P(t)" (PPMS) to the irradiation measurement signal "I(t)" (IMS) by using a curve matching algorithm (CMA) to identify (idf) based on the set of power production measurement values "P(t$_0$)" to "P(t$_n$)" (SPPMV) and the set of irradiation measurement values "I(t$_0$)" to "I(t$_n$)" (SIMV) being collected (clt) at least one good matching time (GMT), in which the power production measurement signal "P(t)" (PPMS) and the irradiation measurement signal "I(t)" (IMS) match optimally through a minimum signal distance (MSD),

   **b)** running (rn) a fitting algorithm (FA) for the at least one good matching time (GMT) and based **<i>** regarding a "good matching time"-related part of the power production measurement signal "P$_{GMT}$(t)" (PPMS$_{GMT}$) on a subset of the set of power production measurement values "P(t$_0$)" to "P(t$_n$)" (SPPMV$_{SS}$) and **<ii>** regarding a "good matching time"-related part of the irradiation measurement signal "I$_{GMT}$(t)" (IMS$_{GMT}$) on a subset of the set of irradiation measurement values "I(t$_0$)" to "I(t$_n$)" (SIMV$_{SS}$ to generate (grt) according to an estimated power production measurement signal "P$_{est}$(t, K)" (PPMS$_{est}$) defined as a function "f(I(t),K)" with "P$_{est}$(t, K)=f(I(t), K=[k0, k1, ...]) a parameter set "K" (PMS) with at least one parameter "[k$_0$, k$_1$, ...] " (PM), in which when running (rn) the fitting algorithm (FA) a deviation between the power production measurement signal "P(t)" (PPMS) and the estimated power production measurement signal "$P_{est}(t, K)$" ($PPMS_{est}$) is minimized by tuning or changing the parameter set "K" (PMS),

**c)** calculating (clc) for the recording time "$[t_0$ to $t_n]$" based on **<1>** the set of power production measurement values "$P(t_0)$" to "$P(t_n)$" (SPPMV), **<2>** the set of irradiation measurement values "$I(t_0)$" to "$I(t_n)$" (SIMV) and **<3>** the generated parameter set "K" (PMS) with the at least one parameter "$[k_0, k_1, ...]$" (PM) the estimated power production measurement signal "$P_{est}(t, K)$" ($PPMS_{est}$) in order to determine (dtm) a value for an energy loss ($E_{loss}$) by an integral calculation (ITC) of a power difference (PD)

$$\int [P_{est}(t, K) - P(t)] \, dt.$$

2. Computer-implemented method according to claim 1, **characterized in that**

the curve matching algorithm (CMA) to identify (idf) the at least one good matching time (GMT) is iterative based, in which following primary steps **"S1$_p$" to "S6$_p$"** of the curve matching algorithm (CMA) are carried out, wherein the steps **"S3$_p$" to "S5$_p$"** are done iteratively

**"S1$_p$"**: Feeding to the curve matching algorithm (CMA) the power production measurement signal "$P(t)$" (PPMS) with the set of power production measurement values "$P(t_0)$" to "$P(t_n)$" (SPPMV) and the irradiation measurement signal "$I(t)$" (IMS) with the set of irradiation measurement values "$I(t_0)$" to "$I(t_n)$" (SIMV),

**"S2$_p$"**: Setting a candidate set for good matching ($CS_{GM}$) to the recording time "$[t_0$ to $t_n]$"

**"S3$_p$"**: Calculating a scaling factor "s" (SF) by solving a first optimization problem (OPP1) to

$$\min_{s} \sum_{t \in candidate\ set} (P(t) - sI(t))^2 \,,$$

**"S4$_p$"**: Including time points into the candidate set for good matching ($CS_{GM}$), wherein all of the following criteria between a "$P(t)$"-value and a "$sI(t)$"-value for "t" in the recording time "$[t_0$ to $t_n]$" are satisfied

- A deviation between the values is smaller than a first threshold value (THV1)
- A difference of variabilities of the values is smaller than a second threshold value (THV2),

**"S5$_p$"**: Going back to the primary step **"S3$_p$"** until the candidate set for good matching ($CS_{GM}$) remains unchanged according to the primary steps **"S4$_p$"**,

**"S6$_p$"**: Output of the at least one good matching time (GMT) corresponding to the candidate set ($CS_{GM}$) after the last iteration of the primary step **"S5$_p$"**.

3. Computer-implemented method according to claim 1 or 2,
   **characterized in that**

the fitting algorithm (FA) is a robust least squares fit algorithm (RLSFA) to generate (grt) the parameter set "K" (PMS) with the at least one parameter "$[k_0, k_1, ...]$" (PM) is iterative based, in which following secondary steps **"S1$_s$" to "S5$_s$"** of the robust least squares fit algorithm (RLSFA) are carried out, wherein the steps **"S2$_s$" to "S4$_s$"** are done iteratively **"S1$_s$"**: Feeding to the robust least squares fit algorithm (RLSFA) the "good matching time"-related part of the power production measurement signal "$P_{GMT}(t)$" ($PPMS_{GMT}$) with the subset of the set of power production measurement values "$P(t_0)$" to "$P(t_n)$" ($SPPMV_{SS}$) and the "good matching time"-related part of the irradiation measurement signal "$I_{GMT}(t)$" ($IMS_{GMT}$) on the subset of the set of irradiation measurement values "$I(t_0)$" to "$I(t_n)$" ($SIMV_{SS}$),

**"S2$_s$"**: Calculating a further parameter set "K*" (PMS') by solving a second optimization problem (OPP2) to

$$K^* = \underset{K^*}{\operatorname{argmin}} \sum_{t \in good\ matching\ times} (P(t) - P_{est}(t, K^*))^2 \,,$$

wherein $P_{est}$ is a function of time "t" and the further parameter set **"K*"** (PMS') with $P_{est}(t, K^*) = f(I(t), K^*)$"

**"S3$_s$"**: Using the further parameter set **"K*"** (PMS') to calculate a set of quadratic deviations (SQD) as **[(P(t) -** $P_{est}$ **(t,K*))$^2$ ... ]** for all "$t \in$ good matching times". Eliminate a percentage share of the times, e.g. 10%, from the good matching times corresponding to the highest values in the set of quadratic deviations (SQD),

"$S4_s$": Going to the secondary step **"$S2_s$"** until a specified number of iterations, e.g., 3 iterations, is achieved,

"$S5_s$": Output of the parameter set "K" (PMS) corresponding to the further parameter set **"K*"** (PMS') after the last iteration of the secondary step "$S4_s$".

4. Computer-implemented method according to claim 1, 2 or 3, **characterized in that** the function "f(I(t),K)" with K=[$k_0$, $k_1$, ...] the estimated power production measurement signal "$P_{est}$(t, K)" (PPMS$_{est}$) is calculated by is a linear function "$P_{est}$ (t, $k_0$)= I(t)" or a quadratic function "$P_{est}$ (t, $k_0$, $k_1$)= $k_0$ I(t) + $k_1$ I(t)$^2$".

5. Computer-implemented method according to one of the claims 1 to 4, **characterized in that** a control information (CINF) is generated and used to control reductions of impacts concerning the calculated energy loss ($E_{loss}$) on the solar power plant (SPP).

6. Computer-implemented tool (CIT), in particular an Application Software <App>, for energy balancing solar power plants, wherein for an energy accounting time period (EATP) of a solar power plant (SPP, INV, PVS, MDV), in which over a recording time "[$t_0$ to $t_n$]" with $n \in \mathbb{N}_0$ corresponding to the energy accounting time period (EATP), **<i>** regarding an irradiation (I), in particular being based on a measured plane-of-array irradiation, by measuring an irradiation measurement signal "I(t)" (IMS), a set of irradiation measurement values "I($t_0$)" to "I($t_n$)" (SIMV) and **<ii>** regarding a generated power (P), in particular being based on a measured power of the complete solar power plant (SPP, INV, PVS, MDV) or at least one part of the solar power plant (INV, PVS, MDV) such as an inverter, a "Photo-Voltaic <PV>"-string or a measurement device, by measuring a power production measurement signal "P(t)" (PPMS) a set of power production measurement values "P($t_0$)" to "P($t_n$)" (SPPMV) are collected (clt), **characterized by:**

a non-transitory, processor-readable storage medium (STM) having processor-readable program-instructions of a program module (PGM) to energy balance solar power plants stored in the non-transitory, processor-readable storage medium (STM) and a processor (PRC) connected with the storage medium (STM) executing the processor-readable program-instructions of the program module (PGM) to energy balance solar power plants, wherein the program module (PGM) and the processor (PRC) form an energy balancing engine (EBE) to:

**a)** match (mtc) for the recording time "[$t_0$ to $t_n$]" the power production measurement signal "P(t)" (PPMS) to the irradiation measurement signal "I(t)" (IMS) by using a curve matching algorithm (CMA) to identify (idf) based on the set of power production measurement values "P($t_0$)" to "P($t_n$)" (SPPMV) and the set of irradiation measurement values "I($t_0$)" to "I($t_n$)" (SIMV) being collected (clt) at least one good matching time (GMT), in which the power production measurement signal "P(t)" (PPMS) and the irradiation measurement signal "I(t)" (IMS) match optimally through a minimum signal distance (MSD),

**b)** run (rn) a fitting algorithm (FA) for the at least one good matching time (GMT) and based **<i>** regarding a "good matching time"-related part of the power production measurement signal "$P_{GMT}$(t)" (PPMS$_{GMT}$) on a subset of the set of power production measurement values "$P_i$($t_0$)" to "$P_i$($t_n$)" (SPPMV$_{SS}$) and **<ii>** regarding a "good matching time"-related part of the irradiation measurement signal "$I_{GMT}$(t)" (IMS$_{GMT}$) on a subset of the set of irradiation measurement values "I($t_0$)" to "I($t_n$)" (SIMV$_{SS}$ to generate (grt) according to an estimated power production measurement signal "$P_{est}$ (t, K)" (PPMS$_{est}$) defined as a function "f(I(t),K)" with "$P_{est}$(t, K) =f(I(t), K=[k0, k1, ...]) a parameter set "K" (PMS) with at least one parameter "[$k_0$, $k_1$, ...]" (PM), in which when running (rn) the fitting algorithm (FA) a deviation between the power production measurement signal "P(t)" (PPMS) and the estimated power production measurement signal "$P_{est}$(t, K)" (PPMS$_{est}$) is minimized by tuning or changing the parameter set "K" (PMS),

**c)** calculate (clc) for the recording time "[$t_0$ to $t_n$]" based on **<1>** the set of power production measurement values "P($t_0$)" to "P($t_n$)" (SPPMV), **<2>** the set of irradiation measurement values "I($t_0$)" to "I($t_n$)" (SIMV) and **<3>** the generated parameter set "K" (PMS) with the at least one parameter "[$k_0$, $k_1$, ...]" (PM) the estimated power production measurement signal "$P_{est}$ (t, K)" (PPMS$_{est}$) in order to determine (dtm) a value for an energy loss ($E_{loss}$) by an integral calculation (ITC) of a power difference (PD)

$$\int [P_{est}(t, K) - P(t)]\, dt.$$

7. Computer-implemented tool (CIT) according to claim 6, **characterized in that** the energy balancing engine (EBE) is designed such that the curve matching algorithm (CMA) to identify (idf) the at least one good matching time (GMT) is iterative based, in which following primary steps **"$S1_p$" to "$S6_p$"** of the

curve matching algorithm (CMA) are carried out, wherein the steps **"S3$_p$" to "S5$_p$"** are done iteratively

**"S1$_p$"**: Feeding to the curve matching algorithm (CMA) the power production measurement signal "P(t)" (PPMS) with the set of power production measurement values "P(t$_0$)" to "P(t$_n$)" (SPPMV) and the irradiation measurement signal "I(t)" (IMS) with the set of irradiation measurement values "I(t$_0$)" to "I(t$_n$)" (SIMV),

**"S2$_p$"**: Setting a candidate set for good matching (CS$_{GM}$) to the recording time "[t$_0$ to t$_n$]",

**"S3$_p$"**: Calculating a scaling factor "s" (SF) by solving a first optimization problem (OPP1) to

$$\min_{s} \sum_{t \in candidate\ set} (P(t) - sI(t))^2 \,,$$

**"S4$_p$"**: Including time points into the candidate set for good matching (CS$_{GM}$), wherein all of the following criteria between a "P(t)"-value and a "sI(t)"-value for "t" in the recording time "[t$_0$ to t$_n$]" are satisfied

- A deviation between the values is smaller than a first threshold value (THV1)
- A difference of variabilities of the values is smaller than a second threshold value (THV2),

**"S5$_p$"**: Going back to the primary step **"S3$_p$"** until the candidate set for good matching (CS$_{GM}$) remains unchanged according to the primary steps **"S4$_p$"**,

**"S6$_p$"**: Output of the at least one good matching time (GMT) corresponding to the candidate set (CS$_{GM}$) after the last iteration of the primary step **"S5$_p$"**.

8. Computer-implemented tool (CIT) according to claim 6 or 7, **characterized in that**

the fitting algorithm (FA) is a robust least squares fit algorithm (RLSFA) and the energy balancing engine (EBE) is designed such that the robust least squares fit algorithm (RLSFA) to generate (grt) the parameter set "K" (PMS) with the at least one parameter "[k$_0$, k$_1$, ...]" (PM) is iterative based, in which following secondary steps **"S1$_s$"** to **"S5$_s$"** of the robust least squares fit algorithm (RLSFA) are carried out, wherein the steps **"S2$_s$"** to **"S4$_s$"** are done iteratively **"S1$_s$"**: Feeding to the robust least squares fit algorithm (RLSFA) the "good matching time"-related part of the power production measurement signal "P$_{GMT}$(t)" (PPMS$_{GMT}$) with the subset of the set of power production measurement values "P(t$_0$)" to "P(t$_n$)" (SPPMV$_{SS}$) and the "good matching time"-related part of the irradiation measurement signal "I$_{GMT}$(t)" (IMS$_{GMT}$) on the subset of the set of irradiation measurement values "I(t$_0$)" to "I(t$_n$)" (SIMV$_{SS}$),

**"S2$_s$"**: Calculating a further parameter set "K*" (PMS') by solving a second optimization problem (OPP2) to

$$K^* = arg\min_{K^*} \sum_{t \in good\ matching\ times} (P(t) - P_{est}(t, K^*))^2 \,,$$

wherein P$_{est}$ is a function of time "t" and the further parameter set **"K*"** (PMS') with P$_{est}$(t, $K^*$)=f(I(t), $K^*$)"

**"S3$_s$"**: Using the further parameter set **"K*"** (PMS') to calculate a set of quadratic deviations (SQD) as **[(P(t) - P$_{est}$(t,K*))$^2$...]** for all "t$\in$ good matching times". Eliminate a percentage share of the times, e.g. 10%, from the good matching times corresponding to highest values in the set of quadratic deviations (SQD),

**"S4$_s$"**: Going to the secondary step **"S2$_s$"** until a specified number of iterations, e.g., 3 iterations, is achieved,

**"S5$_s$"**: Output of the parameter set "K" (PMS) corresponding to the further parameter set **"K*"** (PMS') after the last iteration of the secondary step **"S4$_s$"**.

9. Computer-implemented tool (CIT) according to claim 6, 7 or 8, **characterized in that**
the function "f(I(t),K)" with K=[k$_0$, k1, ...] the estimated power production measurement signal "P$_{est}$(t, K)" (PPMS$_{est}$) is calculated by is a linear function "P$_{est}$ (t, k$_0$) = I(t)" or a quadratic function "P$_{est}$ (t, k$_0$, k$_1$)= k$_0$ I(t) + k$_1$ I(t)$^2$".

10. Computer- implemented tool (CIT) according to one of the claims 1 to 4, **characterized in that**
the energy balancing engine (EBE) is designed such that a control information (CINF) is generated and used to control reductions of impacts concerning the calculated energy loss (E$_{loss}$) on the solar power plant (SPP).

11. Power plant control device (PPCD) for energy balancing solar power plants with a control unit (CU) connected to a solar power plant (SPP, INV, PVS, MDV) for controlling the solar power plant (SPP), in particular to adapt setpoints of the plant or to optimize a maintenance schedule,

**characterized by**

a computer-implemented tool (CIT) according to one of the claims 6 to 10 either being implemented as a sub-unit in the control unit (CU) or forming a functional unit (FTU) with the control unit (CU), in particular such that the computer-implemented tool (CIT) is loadable into the control unit (CU) or forms either a cloud-based, centralized platform for the power plant control device (PPCD) or a decentralized platform for the power plant control device (PPCD), for carrying out the method according to one of the claims 1 to 5.

12. Solar power plant system (SPPS) including a solar power plant (SPP, INV, PVS, MDV), which is controlled, in particular to adapt setpoints of the plant or to optimize a maintenance schedule of the plant,

**characterized by**

a power plant control device (PPCD) for energy balancing solar power plants according to claim 11, which in the course to control the solar power plant (SPP, INV, PVS, MDV) is connected to the solar power plant (SPP, INV, PVS, MDV) and designed such that the computer-implemented method according to one of the claims 1 to 5 is carried out.

**Patentansprüche**

1. Computerimplementiertes Verfahren zum Energieausgleich von Solarkraftwerken durch

Erfassen (clt) für einen Energiebilanzierungszeitraum (EATP) eines Solarkraftwerks (SPP, INV, PVS, MDV), wobei über eine Aufzeichnungszeit "[$t_0$ bis $t_n$]" mit $n \in \mathbb{N}0$ entsprechend dem Energiebilanzierungszeitraum (EATP), <i> in Bezug auf eine Bestrahlung (I), insbesondere basierend auf einer gemessenen Bestrahlung der Ebene der Anordnung, durch Messen eines Bestrahlungsmesssignals "I(t)" (IMS), einer Reihe von Bestrahlungsmesswerten "I($t_0$)" bis "I($t_n$)" (SIMV) und <ii> in Bezug auf eine erzeugte Leistung (P), insbesondere basierend auf einer gemessenen Leistung des gesamten Solarkraftwerks (SPP, INV, PVS, MDV) oder mindestens eines Teils des Solarkraftwerks (INV, PVS, MDV) wie beispielsweise eines Wechselrichters, eines "Photovoltaik<PV>"-Strings oder einer Messvorrichtung, durch Messen eines Stromerzeugungsmesssignals "P(t)" (PPMS) eines Satzes von Messwerten der Stromerzeugung "P($t_0$)" bis "P($t_n$)" (SPPMV),

**gekennzeichnet durch**:

a) Anpassen (mtc) des Stromerzeugungsmesssignals "P(t)" (PPMS) an das Bestrahlungsmesssignal "I(t)" (IMS) für die Aufzeichnungszeit "[$t_0$ bis $t_n$]" unter Verwendung eines curve-matching Algorithmus (CMA) zur Identifizierung (idf) basierend auf dem Satz von Stromerzeugungsmesswerten "P($t_0$)" bis "P($t_n$)" (SPPMV) und dem Satz von Bestrahlungsmesswerten "I($t_0$)" bis "I($t_n$)" (SIMV), die zu mindestens einer guten Anpassungszeit (GMT) erfasst (clt) werden, in der das Stromerzeugungsmesssignal "P(t)" (PPMS) und das Bestrahlungsmesssignal "I(t)" (IMS) **durch** einen minimalen Signalabstand (MSD) optimal übereinstimmen,

b) Ausführen (rn) eines Anpassungsalgorithmus (FA) für die mindestens eine gute Anpassungszeit (GMT) und basierend **<i>** in Bezug auf einem mit der "guten Anpassungszeit" zusammenhängenden Teil des Stromerzeugungsmesssignals "$P_{GMT}$(t)" (PPMS$_{GMT}$) auf einem Teilsatz des Satzes der Stromerzeugungsmesswerte "P($t_0$)" bis "P($t_n$)" (SPPMV$_{SS}$) und **<ii>** in Bezug auf einen mit der "guten Anpassungszeit" zusammenhängenden Teil des Bestrahlungsmesssignals "$I_{GMT}$(t)" (IMSS$_{GMT}$) auf einem Teilsatz des Satzes der Bestrahlungsmesswerte "I($t_0$)" bis "I($t_n$)" (SIMV$_{SS}$) zur Erzeugung (grt) gemäß einem geschätzten Stromerzeugungsmesssignal "$P_{est}$(t, K)" (PPMS$_{est}$), das definiert ist als eine Funktion "f(I(t), K)" mit "$P_{est}$(t, K)=f(I(t), K=[k0, k1, ...])", eines Parametersatzes "K" (PMS) mit mindestens einem Parameter "[$k_0$, $k_1$, ...]" (PM), wobei beim Ausführen (rn) des Anpassungsalgorithmus (FA) eine Abweichung zwischen dem Stromerzeugungsmesssignal "P(t)" (PPMS) und dem geschätzten Stromerzeugungsmesssignal "$P_{est}$(t, K)" (PPMS$_{est}$) **durch** Abstimmung oder Änderung des Parametersatzes "K" (PMS) minimiert wird,

c) Berechnen (clc) der Aufzeichnungszeit "[$t_0$ bis $t_n$]" basierend auf **<1>** dem Satz von Stromerzeugungsmesswerten "P($t_0$)" bis "P($t_n$)" (SPPMV), **<2>** dem Satz von Bestrahlungsmesswerten "I($t_0$)" bis "I($t_n$)" (SIMV) und **<3>** dem erzeugten Parametersatz "K" (PMS) mit dem mindestens einen Parameter "[$k_0$, k1, ...]" (PM) des geschätzten Stromerzeugungsmesssignals "$P_{est}$(t, K)" (PPMS$_{est}$) zur Bestimmung (dtm) eines Werts für einen Energieverlust ($E_{loss}$) **durch** eine integrale Berechnung (ITC) einer Leistungsdifferenz (PD)

$$\int [P_{est}(t, K) - P(t)]dt.$$

2. Computerimplementiertes Verfahren nach Anspruch 1, **dadurch gekennzeichnet, dass**

der curve-matching Algorithmus (CMA) zur Identifizierung (idf) der mindestens einen guten Anpassungszeit (GMT) iterativ basiert ist, wobei folgende Primärschritte "$S1_p$" bis "$S6_p$" des curve-matching Algorithmus (CMA) durchgeführt werden, wobei die Schritte "$S3_p$" bis "$S5_p$" iterativ durchgeführt werden

"$S1_p$": Einspeisen des Stromerzeugungsmesssignals "P(t)" (PPMS) mit dem Satz von Stromerzeugungsmesswerten "$P(t_0)$" bis "$P(t_n)$" (SPPMV) und des Bestrahlungsmesssignals "I(t)" (IMS) mit dem Satz von Bestrahlungsmesswerten "$I(t_0)$" bis "$I(t_n)$" (SIMV) in den curve-matching Algorithmus (CMA),

"$S2_p$": Einstellen eines Kandidatensatzes für gute Anpassung ($CS_{GM}$) auf die Aufzeichnungszeit "$[t_0$ bis $t_n]$"

"$S3_p$": Berechnen eines Skalierungsfaktors "s" (SF) durch Lösen eines ersten Optimierungsproblems (OPP1) zu

$$\min_{s} \sum_{t \in \atop Kandidatensatzes} (P(t) - sI(t))^2 \, ,$$

"$S4_p$": Einschließen von Zeitpunkten in den Kandidatensatz für gute Anpassung ($CS_{GM}$), wobei alle folgenden Kriterien zwischen einem "P(t)"-Wert und einem "sI(t)"-Wert für "t" in der Aufzeichnungszeit "$[t_0$ bis $t_n]$" erfüllt sind

- Eine Abweichung zwischen den Werten ist kleiner als ein erster Schwellwert (THV1)
- Eine Variabilitätsdifferenz der Werte ist kleiner als ein zweiter Schwellwert (THV2),

"$S5_p$": Zurückgehen zum Primärschritt "$S3_p$", bis der Kandidatensatz für gute Anpassung ($CS_{GM}$) gemäß den Primärschritten **"$S4_p$"** unverändert bleibt,

"$S6_p$": Ausgeben der mindestens einen guten Anpassungszeit (GMT), die dem Kandidatensatz ($CS_{GM}$) nach der letzten Iteration des Primärschritts **"$S5_p$"** entspricht.

3. Computerimplementiertes Verfahren nach Anspruch 1 oder 2, **dadurch gekennzeichnet, dass**

der Anpassungsalgorithmus (FA) ein robuster Kleinste-Quadrate-Anpassungsalgorithmus (RLSFA) ist zur Erzeugung (grt) des Parametersatzes "K" (PMS) mit dem mindestens einen Parameter "$[k_0, k_1, ...]$" (PM) ist iterativ basiert, wobei folgende Sekundärschritte "$S1_s$" bis "$S5_s$" des robusten Kleinste-Quadrate-Anpassungsalgorithmus (RLSFA) durchgeführt werden, wobei die Schritte **"$S2_s$"** bis **"$S4_s$"** iterativ durchgeführt werden

"$S1_s$": Einspeisen des mit der "guten Anpassungszeit" zusammenhängenden Teils des Stromerzeugungsmesssignals "$P_{GMT}(t)$" ($PPMS_{GMT}$) mit dem Teilsatz des Satzes der Stromerzeugungsmesswerte "$P(t_0)$" bis "$P(t_n)$" ($SPPMV_{SS}$) und des mit der "guten Anpassungszeit" zusammenhängenden Teils des Bestrahlungsmesssignals "$I_{GMT}(t)$" ($IMS_{GMT}$) auf dem Teilsatz des Satzes der Bestrahlungsmesswerte "$I(t_0)$" bis "$I(t_n)$" ($SIMV_{SS}$) in den robusten Kleinste-Quadrate-Anpassungsalgorithmus (RLSFA),

"$S2_s$": Berechnen eines weiteren Parametersatzes "K*" (PMS') durch Lösen eines zweiten Optimierungsproblems (OPP2) zu

$$K^* = \underset{K^*}{\mathrm{argmin}} \sum_{t \in \atop guten \ Anpassungszeiten} (P(t) - P_{est}(t, K^*))^2 \, ,$$

wobei $P_{est}$ eine Funktion der Zeit "t" ist und der weitere Parametersatz "K*" (PMS') mit $P_{est}(t, \boldsymbol{K}^*)$=f(I(t), $\boldsymbol{K}^*$)" ist

"$S3_s$": Verwenden des weiteren Parametersatzes "K*" (PMS') zum Berechnen eines Satzes quadratischer Abweichungen (SQD) als **f(P(t)-$P_{es}$t(t,K*))² ... ]** für alle "t ∈ guten Anpassungszeiten". Eliminieren eines prozentualen Anteils der Zeiten, z. B. 10 %, aus den guten Anpassungszeiten, die den höchsten Werten im Satz quadratischer Abweichungen (SQD) entsprechen,

"$S4_s$": Übergehen zu dem Sekundärschritt **"$S2_s$"**, bis eine definierte Anzahl von Iterationen, z. B. 3 Iterationen, erreicht ist,

"$S5_s$": Ausgeben des dem weiteren Parametersatz "K*" (PMS') entsprechenden Parametersatzes "K" (PMS) nach der letzten Iteration des Sekundärschritts **"$S4_s$"**.

4. Computerimplementiertes Verfahren nach Anspruch 1, 2 oder 3, **dadurch gekennzeichnet, dass**
die Funktion "f(I(t), K)" mit K=$[k_0, k_1, ...]$ das geschätzte Stromerzeugungsmesssignal "$P_{est}(t, K)$" ($PPMS_{est}$) durch eine lineare Funktion "$P_{est}(t, k_0)$= I(t)" oder eine quadratische Funktion "$P_{est}(t, k_0, k_1)$= $k_0$ I(t) + $k_1$ I(t)²" berechnet wird.

**5.** Computerimplementiertes Verfahren nach einem der Ansprüche 1 bis 4, **dadurch gekennzeichnet, dass** eine Steuerungsinformation (CINF) erzeugt wird und zur Steuerung von Einwirkungsreduzierungen bezüglich des berechneten Energieverlustes ($E_{loss}$) auf das Solarkraftwerk (SPP) verwendet wird.

**6.** Computerimplementiertes Werkzeug (CIT), insbesondere eine Anwendungssoftware <App>, für den Energieausgleich von Solarkraftwerken, wobei für einen Energiebilanzierungszeitraum (EATP) eines Solarkraftwerks (SPP, INV, PVS, MDV), wobei über eine Aufzeichnungszeit "[$t_0$ bis $t_n$]" mit $n \in \mathbb{N}0$ entsprechend dem Energiebilanzierungszeitraum (EATP), **<i>** in Bezug auf eine Bestrahlung (I), insbesondere basierend auf einer gemessenen Bestrahlung der Ebene der Anordnung, durch Messen eines Bestrahlungsmesssignals "I(t)" (IMS), einer Reihe von Bestrahlungsmesswerten "I($t_0$)" bis "I($t_n$)" (SIMV) und **<ii>** in Bezug auf eine erzeugte Leistung (P), insbesondere basierend auf einer gemessenen Leistung des gesamten Solarkraftwerks (SPP, INV, PVS, MDV) oder mindestens eines Teils des Solarkraftwerks (INV, PVS, MDV) wie beispielsweise eines Wechselrichters, eines "Photovoltaik<PV>"-Strings oder einer Messvorrichtung, durch Messen eines Stromerzeugungsmesssignals "P(t)" (PPMS) eines Satzes von Messwerten der Stromerzeugung "P($t_0$)" bis "P($t_2$)" (SPPMV) erfasst (clt) werden,
**gekennzeichnet durch**:
ein nichtflüchtiges, prozessorlesbares Speichermedium (STM) mit prozessorlesbaren Programmanweisungen eines Programmmoduls (PGM) zum Energieausgleich von Solarkraftwerken, die in dem nichtflüchtigen, prozessorlesbaren Speichermedium (STM) gespeichert sind, und einen Prozessor (PRC), der mit dem Speichermedium (STM) verbunden ist und die prozessorlesbaren Programmanweisungen des Programmmoduls (PGM) zum Energieausgleich von Solarkraftwerken ausführt, wobei das Programmmodul (PGM) und der Prozessor (PRC) eine Energieausgleichsmaschine (EBE) bilden, um Folgendes durchzuführen:

**a)** Anpassen (mtc) des Stromerzeugungsmesssignals "P(t)" (PPMS) an das Bestrahlungsmesssignal "I(t)" (IMS) für die Aufzeichnungszeit "[$t_0$ bis $t_n$]" unter Verwendung eines curve-matching Algorithmus (CMA) zur Identifizierung (idf) basierend auf dem Satz von Stromerzeugungsmesswerten "P($t_0$)" bis "P($t_n$)" (SPPMV) und dem Satz von Bestrahlungsmesswerten "I($t_0$)" bis "I($t_n$)" (SIMV), die zu mindestens einer guten Anpassungszeit (GMT) erfasst (clt) werden, in der das Stromerzeugungsmesssignal "P(t)" (PPMS) und das Bestrahlungsmesssignal "I(t)" (IMS) **durch** einen minimalen Signalabstand (MSD) optimal übereinstimmen,
**b)** Ausführen (rn) eines Anpassungsalgorithmus (FA) für mindestens eine gute Anpassungszeit (GMT) und basierend <i> in Bezug auf einen mit der "guten Anpassungszeit" zusammenhängenden Teil des Stromerzeugungsmesssignals "$P_{GMT}$(t)" ($PPMS_{GMT}$) auf einem Teilsatz des Satzes der Stromerzeugungsmesswerte "$P_i$($t_0$)" bis "$P_i$($t_n$)" ($SPPMV_{SS}$) und <ii> in Bezug auf einen mit der "guten Anpassungszeit" zusammenhängenden Teil des Bestrahlungsmesssignals "$I_{GMT}$(t)" ($IMS_{GMT}$) auf einem Teilsatz der Bestrahlungsmesswerte "I($t_0$)" bis "I($t_n$)" ($SIMV_{SS}$ zur Erzeugung (grt) gemäß einem geschätzten Stromerzeugungsmesssignal "$P_{est}$(t, K)" ($PPMS_{est}$), das definiert ist als eine Funktion "f(I(t), K)" mit "$P_{est}$(t, K)=f(I(t), K=[k0, $k_1$, ...]), eines Parametersatzes "K" (PMS) mit mindestens einem Parameter "[$k_0$, k1, ...]" (PM), wobei beim Ausführen (rn) des Anpassungsalgorithmus (FA) eine Abweichung zwischen dem Stromerzeugungsmesssignal "P(t)" (PPMS) und dem geschätzten Stromerzeugungsmesssignal "$P_{est}$(t, K)" ($PPMS_{est}$) **durch** Abstimmen oder Ändern des Parametersatzes "K" (PMS) minimiert wird,
**c)** Berechnen (clc) der Aufzeichnungszeit "[$t_0$ bis $t_n$]" basierend auf **<1>** dem Satz von Stromerzeugungsmesswerten "P($t_0$)" bis "P($t_2$)" (SPPMV), **<2>** dem Satz von Bestrahlungsmesswerten "I($t_0$)" bis "I($t_n$)" (SIMV) und <3> dem erzeugten Parametersatz "K" (PMS) mit dem mindestens einen Parameter "[$k_0$, k1, ...]" (PM) des geschätzten Stromerzeugungsmesssignals "$P_{est}$(t, K)" ($PPMS_{est}$) zur Bestimmung (dtm) eines Werts für einen Energieverlust ($E_{loss}$) **durch** eine integrale Berechnung (ITC) einer Leistungsdifferenz (PD)

$$\int [P_{est}(t, K) - P(t)]dt.$$

**7.** Computerimplementiertes Werkzeug (CIT) nach Anspruch 6, **dadurch gekennzeichnet, dass**

die Energieausgleichsmaschine (EBE) so ausgelegt ist, dass der curve-matching Algorithmus (CMA) zur Identifizierung (idf) der mindestens einen guten Anpassungszeit (GMT) iterativ basiert ist, wobei folgende Primärschritte "$S1_p$" bis "$S6_p$" des curve-matching Algorithmus (CMA) durchgeführt werden, wobei die Schritte "$S3_p$" bis "$S5_p$" iterativ durchgeführt werden
"$S1_p$": Einspeisen des Stromerzeugungsmesssignals "P(t)" (PPMS) mit dem Satz von Stromerzeugungsmesswerten "P($t_0$)" bis "P($t_n$)" (SPPMV) und des Bestrahlungsmesssignals "I(t)" (IMS) mit dem Satz von Bestrahlungsmesswerten "I($t_0$)" bis "I($t_n$)" (SIMV) in den curve-matching Algorithmus (CMA),
**"$S2_p$":** Einstellen eines Kandidatensatzes für gute Anpassung ($CS_{GM}$) auf die Aufzeichnungszeit "[$t_0$ bis $t_n$]",

**"S3$_p$":** Berechnen eines Skalierungsfaktors "s" (SF) durch Lösen eines ersten Optimierungsproblems (OPP1) zu

$$\min_{s} \sum_{t \in \ Kandidatensatzes} (P(t) - sI(t))^2 \, ,$$

**"S4$_p$":** Einschließen von Zeitpunkten in den Kandidatensatz für gute Anpassung (CS$_{GM}$), wobei alle folgenden Kriterien zwischen einem "P(t)"-Wert und einem "sI(t)"-Wert für "t" in der Aufzeichnungszeit "[t$_0$ bis t$_n$]" erfüllt sind

- Eine Abweichung zwischen den Werten ist kleiner als ein erster Schwellwert (THV1)
- Eine Variabilitätsdifferenz der Werte ist kleiner als ein zweiter Schwellwert (THV2),

**"S5$_p$":** Zurückgehen zum Primärschritt **"S3$_p$"**, bis der Kandidatensatz für gute Anpassung (CS$_{GM}$) gemäß den Primärschritten **"S4$_p$"** unverändert bleibt,

**"S6$_p$":** Ausgeben der mindestens einen guten Anpassungszeit (GMT), die dem Kandidatensatz (CS$_{GM}$) nach der letzten Iteration des Primärschritts **"S5$_p$"** entspricht.

8. Computerimplementiertes Werkzeug (CIT) nach Anspruch 6 oder 7, **dadurch gekennzeichnet, dass**

der Anpassungsalgorithmus (FA) ein robuster Kleinste-Quadrate-Anpassungsalgorithmus (RLSFA) ist und die Energieausgleichsmaschine (EBE) so ausgelegt ist, dass der Kleinste-Quadrate-Anpassungsalgorithmus (RLSFA) zur Erzeugung (grt) des Parametersatzes "K" (PMS) mit dem mindestens einen Parameter "[k$_0$, k$_1$, ...]" (PM) iterativ basiert ist, wobei folgende Sekundärschritte **"S1$_s$"** bis **"S5$_s$"** des robusten Kleinste-Quadrate-Anpassungsalgorithmus (RLSFA) durchgeführt werden, wobei die Schritte **"S2$_s$"** bis **"S4$_s$"** iterativ durchgeführt werden

**"S1$_s$":** Einspeisen des mit der "guten Anpassungszeit" zusammenhängenden Teils des Stromerzeugungsmesssignals "P$_{GMT}$(t)" (PPMS$_{GMT}$) mit dem Teilsatz des Satzes der Stromerzeugungsmesswerte "P(t$_0$)" bis "P(t$_n$)" (SPPMV$_{SS}$) und des mit der "guten Anpassungszeit" zusammenhängenden Teils des Bestrahlungsmesssignals "I$_{GMT}$(t)" (IMS$_{GMT}$) auf dem Teilsatz des Satzes der Bestrahlungsmesswerte "I(t$_0$)" bis "I(t$_n$)" (SIMV$_{SS}$ in den robusten Kleinste-Quadrate-Anpassungsalgorithmus (RLSFA),

**"S2$_s$":** Berechnen eines weiteren Parametersatzes "K*" (PMS') durch Lösen eines zweiten Optimierungsproblems (OPP2) zu

$$K^* = arg\min_{K^*} \sum_{t \in \ guten \ Anpassungszeiten} (P(t) - P_{est}(t, K^*))^2 \, ,$$

wobei P$_{est}$ eine Funktion der Zeit "t" ist und der weitere Parametersatz "***K*****" (PMS') mit Pest(t, ***K*****)=f(I(t), ***K*)*** ist

**"S3s":** Verwenden des weiteren Parametersatzes "***K*****" (PMS') zum Berechnen eines Satzes quadratischer Abweichungen (SQD) als **[(P(t)-P$_{est}$(t, K*))2** ... ] für alle "t ∈ guten Anpassungszeiten". Eliminieren eines prozentualen Anteils der Zeiten, z. B. 10 %, aus den guten Anpassungszeiten, die den höchsten Werten im Satz quadratischer Abweichungen (SQD) entsprechen,

**"S4s":** Übergehen zu dem Sekundärschritt **"S2s"**, bis eine definierte Anzahl von Iterationen, z. B. 3 Iterationen, erreicht ist,

**"S5s":** Ausgeben des dem weiteren Parametersatz "***K*****" (PMS') entsprechenden Parametersatzes "K" (PMS) nach der letzten Iteration des Sekundärschritts **"S4s"**.

9. Computerimplementiertes Werkzeug (CIT) nach Anspruch 6, 7 oder 8, **dadurch gekennzeichnet, dass** die Funktion "f(I(t), K)" mit K=[k$_0$, k$_1$, ...] das geschätzte Stromerzeugungsmesssignal "P$_{est}$(t, K)" (PPMS$_{est}$) durch eine lineare Funktion "P$_{est}$(t, k$_0$)= I(t)" oder eine quadratische Funktion "P$_{est}$(t, k$_0$, k$_1$)= k$_0$ I(t) + k$_1$ I(t)$^2$" berechnet wird.

10. Computerimplementiertes Werkzeug (CIT) nach einem der Ansprüche 1 bis 4, **dadurch gekennzeichnet, dass** die Energieausgleichsmaschine (EBE) derart ausgelegt ist, dass eine Steuerungsinformation (CINF) erzeugt wird und zur Steuerung von Einwirkungsreduzierungen bezüglich des berechneten Energieverlustes (E$_{loss}$) an dem Solarkraftwerk (SPP) verwendet wird.

11. Kraftwerkssteuerungsvorrichtung (PPCD) zum Energieausgleich von Solarkraftwerken mit einer mit einem Solarkraftwerk (SPP, INV, PVS, MDV) verbundenen Steuereinheit (CU) zur Steuerung des Solarkraftwerks (SPP), insbesondere zum Einstellen von Sollwerten des Kraftwerks oder zur Optimierung eines Wartungsplans, **gekennzeichnet durch**

ein computerimplementiertes Werkzeug (CIT) nach einem der Ansprüche 6 bis 10, das entweder als Untereinheit in der Steuereinheit (CU) implementiert ist oder mit der Steuereinheit (CU) eine Funktionseinheit (FTU) bildet, insbesondere derart, dass das computerimplementierte Werkzeug (CIT) in die Steuereinheit (CU) ladbar ist oder entweder eine cloudbasierte, zentrale Plattform für die Kraftwerkssteuerungsvorrichtung (PPCD) oder eine dezentrale Plattform für die Kraftwerkssteuerungsvorrichtung (PPCD) bildet, um das Verfahren nach einem der Ansprüche 1 bis 5 auszuführen.

12. Solarkraftwerkssystem (SPPS), das ein Solarkraftwerk (SPP, INV, PVS, MDV) beinhaltet, die gesteuert wird, insbesondere um Sollwerte des Kraftwerks einzustellen oder um einen Wartungsplan des Kraftwerks zu optimieren, **gekennzeichnet durch** eine Kraftwerkssteuerungsvorrichtung (PPCD) zum Energieausgleich von Solarkraftwerken nach Anspruch 11, die im Zuge der Steuerung des Solarkraftwerks (SPP, INV, PVS, MDV) mit dem Solarkraftwerk (SPP, INV, PVS, MDV) verbunden und derart ausgebildet ist, dass das computerimplementierte Verfahren nach einem der Ansprüche 1 bis 5 ausgeführt wird.

## Revendications

1. Procédé mis en œuvre par ordinateur pour un équilibrage en énergie de centrales électriques solaires, par

la collecte (clt), pendant une durée de bilan énergétique (EATP) d'une centrale électrique solaire (SPP, INV, PVS, MDV), dans laquelle, sur une période d'enregistrement « $[t_0$ à $t_n]$ », avec $n \in \mathbb{N}_0$ , correspondant à la durée de bilan énergétique (EATP), <i> en ce qui concerne une irradiation (I), en particulier qui est basée sur une irradiation de plan de réseau mesurée, par la mesure d'un signal de mesure d'irradiation « I(t) » (IMS), d'un ensemble de valeurs de mesure d'irradiation « $I(t_0)$ » à « $I(t_n)$ » (SIMV) et <ii> en ce qui concerne une électricité produite (P), en particulier qui est basée sur une électricité mesurée de la totalité de la centrale électrique solaire (SPP, INV, PVS, MDV) ou d'au moins une partie de la centrale électrique solaire (INV, PVS, MDV) telle qu'un onduleur, une chaîne « Photovoltaïque <PV> » ou un dispositif de mesure, par la mesure d'un signal de mesure de production d'électricité « P(t) » (PPMS), d'un ensemble de valeurs de mesure de production d'électricité « $P(t_0)$ » à « $P(t_n)$ » (SPPMV),
**caractérisé par** :

a) la mise en concordance (mtc), pendant la période d'enregistrement « $[t_0$ à $t_n]$ », du signal de mesure de production d'électricité « P(t) » (PPMS) avec le signal de mesure d'irradiation « I(t) » (IMS) en utilisant un algorithme de mise en concordance de courbes (CMA) pour identifier (idf), sur la base de l'ensemble de valeurs de mesure de production d'électricité « $P(t_0)$ » à « $P(t_n)$ » (SPPMV) et de l'ensemble de valeurs de mesure d'irradiation « $I(t_0)$ » à « $I(t_n)$ » (SIMV) qui sont collectés (clt), au moins un temps de bonne concordance (GMT), dans lequel le signal de mesure de production d'électricité « P(t) » (PPMS) et le signal de mesure d'irradiation « I(t) » (IMS) concordent de manière optimale au travers d'une distance de signal minimale (MSD),
b) le lancement (rn) d'un algorithme d'ajustement (FA) pendant l'au moins un temps de bonne concordance (GMT) et sur la base de <i> ce qui concerne une partie relative au « temps de bonne concordance » du signal de mesure de production d'électricité « $P_{GMT}(t)$ » ($PPMS_{GMT}$) sur un sous-ensemble de l'ensemble de valeurs de mesure de production d'électricité « $P(t_0)$ » à « $P(t_n)$ » ($SPPMV_{SS}$) et <ii> ce qui concerne une partie relative au « temps de bonne concordance » du signal de mesure d'irradiation « $I_{GMT}(t)$ » ($IMS_{GMT}$) sur un sous-ensemble de l'ensemble de valeurs de mesure d'irradiation « $I(t_0)$ » à « $I(t_n)$ » ($SIMV_{SS}$) pour générer (grt), selon un signal de mesure de production d'électricité estimé « $P_{est}(t, K)$ » ($PPMS_{est}$) défini comme étant une fonction « f(I(t),K) » avec « $P_{est}(t, K) = f(I(t), K = [k0, k1, ...])$, un ensemble de paramètres « K » (PMS) ayant au moins un paramètre « $[k_0, k_1, ...]$ » (PM), dans lequel, lors du lancement (rn) de l'algorithme d'ajustement (FA), un écart entre le signal de mesure de production d'électricité « P(t) » (PPMS) et le signal de mesure de production d'électricité estimé « $P_{est} (t, K)$ » ($PPMS_{est}$) est minimisé par l'affinage ou le changement de l'ensemble de paramètres « K » (PMS),
c) le calcul (clc), pendant la période d'enregistrement « $[t_0$ à $t_n]$ » sur la base <1> de l'ensemble de valeurs de mesure de production d'électricité « $P(t_0)$ » à « $P(t_n)$ » (SPPMV), <2> de l'ensemble de valeurs de mesure d'irradiation « $I(t_0)$ » à « $I(t_n)$ » (SIMV) et <3> de l'ensemble de paramètres « K » (PMS) généré ayant l'au

moins un paramètre « [$k_0$, $k_1$, ...] » (PM), du signal de mesure de production d'électricité estimé « $P_{est}(t, K)$ » (PPMS$_{est}$) afin de déterminer (dtm) une valeur pour une perte d'énergie (E$_{loss}$) par un calcul d'intégrale (ITC) d'une différence d'électricité (PD)

$$\int [P_{est}(t, K) - P(t)]dt .$$

2. Procédé mis en œuvre par ordinateur selon la revendication 1, **caractérisé en ce que**

l'algorithme de mise en concordance de courbes (CMA) pour identifier (idf) l'au moins un temps de bonne concordance (GMT) est à base itérative, dans lequel les étapes primaires suivantes « $S1_p$ » à « $S6_p$ » de l'algorithme de mise en concordance de courbes (CMA) sont effectuées, dans lequel les étapes « $S3_p$ » à « $S5_p$ » sont réalisées de manière itérative

« $S1_p$ » : Apporter, à l'algorithme de mise en concordance de courbes (CMA), le signal de mesure de production d'électricité « P(t) » (PPMS) ayant l'ensemble de valeurs de mesure de production d'électricité « $P(t_0)$ » à « $P(t_n)$ » (SPPMV) et le signal de mesure d'irradiation « I(t) » (IMS) ayant l'ensemble de valeurs de mesure d'irradiation « $I(t_0)$ » à « $I(t_n)$ » (SIMV), « $S2_p$ » : Établir un ensemble de candidats pour une bonne concordance (CS$_{GM}$) avec la période d'enregistrement « [$t_0$ à $t_n$] » « $S3_p$ » : Calculer un facteur de redimensionnement « s » (SF) par la résolution d'un premier problème d'optimisation (OPP1) dans

$$\min_{s} \sum_{t \in ensemble\ de\ candidats} \big(P(t) - sI(t)\big)^2,$$

« $S4_p$ » : Inclure des points temporels dans l'ensemble de candidats pour une bonne concordance (CS$_{GM}$), dans lequel tous les critères suivants entre une valeur « P(t) » et une valeur « sI(t) » pour « t » dans la période d'enregistrement « [$t_0$ à $t_n$] » sont satisfaits

- un écart entre les valeurs est inférieur à une première valeur seuil (THV1)
- une différence des variabilités des valeurs est inférieure à une deuxième valeur seuil (THV2),

« $S5_p$ » : Revenir à l'étape primaire « $S3_p$ » jusqu'à ce que l'ensemble de candidats pour une bonne concordance (CS$_{GM}$) reste inchangé selon les étapes primaires « $S4_p$ »,
« $S6_p$ » : Délivrer en sortie l'au moins un temps de bonne concordance (GMT) correspondant à l'ensemble de candidats (CS$_{GM}$) après la dernière itération de l'étape primaire « $S5_p$ ».

3. Procédé mis en œuvre par ordinateur selon la revendication 1 ou 2, **caractérisé en ce que**

l'algorithme d'ajustement (FA) est un algorithme d'ajustement des moindres carrés robuste (RLSFA) pour générer (grt) l'ensemble de paramètres « K » (PMS) ayant l'au moins un paramètre « [$k_0$, $k_1$, ...] » (PM) et est à base itérative, dans lequel les étapes secondaires suivantes « $S1_s$ » à « $S5_s$ » de l'algorithme d'ajustement des moindres carrés robuste (RLSFA) sont effectuées, dans lequel les étapes « $S2_s$ » à « $S4_s$ » sont réalisées de manière itérative

« $S1_s$ » : Apporter, à l'algorithme d'ajustement des moindres carrés robuste (RLSFA), la partie relative au « temps de bonne concordance » du signal de mesure de production d'électricité « $P_{GMT}(t)$ » (PPMS$_{GMT}$) ayant le sous-ensemble de l'ensemble de valeurs de mesure de production d'électricité « $P(t_0)$ » à « $P(t_n)$ » (SPPMV$_{SS}$) et la partie relative au « temps de bonne concordance » du signal de mesure d'irradiation « $I_{GMT}(t)$ » (IMS$_{GMT}$) sur le sous-ensemble de l'ensemble de valeurs de mesure d'irradiation « $I(t_0)$ » à « $I(t_n)$ » (SIMV$_{SS}$),
« $S2_s$ » : Calculer un ensemble de paramètres supplémentaire « K* » (PMS') par la résolution d'un deuxième problème d'optimisation (OPP2) dans

$$K^* = \underset{K^*}{\operatorname{argmin}} \sum_{t \in temps\ de\ bonne\ concordance} \big(P(t) - P_{est}(t, K^*)\big)^2,$$

dans lequel $P_{est}$ est une fonction du temps « t » et de l'ensemble de paramètres supplémentaire « K* » (PMS') avec $P_{est}(t, K^*) = f(I(t), K^*)$ »
« $S3_s$ » : Utiliser l'ensemble de paramètres supplémentaire « K* » (PMS') pour calculer un ensemble d'écarts quadratiques (SQD) comme étant $[(P(t)-P_{est}(t, K^*))^2 ...]$ pour tous les « $t \in$ temps de bonne concordance ». Éliminer une part en pourcentage des temps, par ex. 10 %, des temps de bonne concordance correspondant aux valeurs les plus élevées dans l'ensemble d'écarts quadratiques (SQD),

« $S4_s$ » : Passer à l'étape secondaire « $S2_s$ » jusqu'à ce qu'un nombre spécifié d'itérations, par ex., 3 itérations, soit atteint,

« $S5_s$ » : Délivrer en sortie l'ensemble de paramètres « K » (PMS) correspondant à l'ensemble de paramètres supplémentaire « K* » (PMS') après la dernière itération de l'étape secondaire « $S4_s$ ».

4. Procédé mis en œuvre par ordinateur selon la revendication 1, 2 ou 3, **caractérisé en ce que**
la fonction « f(I(t),K) » avec K = [$k_0$, $k_1$, ...] pour le signal de mesure de production d'électricité estimé « $P_{est}(t, K)$ » ($PPMS_{est}$) est calculée par une fonction linéaire « $P_{est}(t, k_0) = I(t)$ » ou une fonction quadratique « $P_{est}(t, k_0, k_1) = k_0 I(t) + k_1 I(t)^2$ ».

5. Procédé mis en œuvre par ordinateur selon l'une des revendications 1 à 4, **caractérisé en ce que**
une information de commande (CINF) est générée et utilisée pour commander des réductions d'impacts concernant la perte d'énergie ($E_{loss}$) calculée sur la centrale électrique solaire (SPP).

6. Outil mis en œuvre par ordinateur (CIT), en particulier une application logicielle <App>, pour un équilibrage en énergie de centrales électriques solaires, dans lequel pendant une durée de bilan énergétique (EATP) d'une centrale électrique solaire (SPP, INV, PVS, MDV), sur une période d'enregistrement « [$t_0$ à $t_n$] », avec $n \in \mathbb{N}_0$ correspondant à la durée de bilan énergétique (EATP), <i> en ce qui concerne une irradiation (I), en particulier qui est basée sur une irradiation de plan de réseau mesurée, par la mesure d'un signal de mesure d'irradiation « I(t) » (IMS), un ensemble de valeurs de mesure d'irradiation « I($t_0$) » à « I($t_n$) » (SIMV) et <ii> en ce qui concerne une électricité produite (P), en particulier qui est basée sur une électricité mesurée de la totalité de la centrale électrique solaire (SPP, INV, PVS, MDV) ou d'au moins une partie de la centrale électrique solaire (INV, PVS, MDV) telle qu'un onduleur, une chaîne « Photovoltaïque <PV> » ou un dispositif de mesure, par la mesure d'un signal de mesure de production d'électricité « P(t) » (PPMS), un ensemble de valeurs de mesure de production d'électricité « P($t_0$) » à « P($t_n$) » (SPPMV), sont collectés (clt),
**caractérisé par** :

un support de stockage (STM) non transitoire lisible par processeur ayant des instructions de programme lisibles par processeur d'un module de programme (PGM), pour équilibrer en énergie des centrales électriques solaires, stockées dans le support de stockage (STM) non transitoire lisible par processeur et un processeur (PRC) connecté au support de stockage (STM) exécutant les instructions de programme lisibles par processeur du module de programme (PGM) pour équilibrer en énergie des centrales électriques solaires, dans lequel le module de programme (PGM) et le processeur (PRC) forment un moteur en équilibrage en énergie (EBE) pour :

a) mettre en concordance (mtc), pendant la période d'enregistrement « [$t_0$ à $t_n$] », le signal de mesure de production d'électricité « P(t) » (PPMS) avec le signal de mesure d'irradiation « I(t) » (IMS) en utilisant un algorithme de mise en concordance de courbes (CMA) pour identifier (idf), sur la base de l'ensemble de valeurs de mesure de production d'électricité « P($t_0$) » à « P($t_n$) » (SPPMV) et de l'ensemble de valeurs de mesure d'irradiation « I($t_0$) » à « I($t_n$) » (SIMV) qui sont collectés (clt), au moins un temps de bonne concordance (GMT), dans lequel le signal de mesure de production d'électricité « P(t) » (PPMS) et le signal de mesure d'irradiation « I(t) » (IMS) concordent de manière optimale au travers d'une distance de signal minimale (MSD),

b) lancer (rn) un algorithme d'ajustement (FA) pendant l'au moins un temps de bonne concordance (GMT) et sur la base de <i> ce qui concerne une partie relative au « temps de bonne concordance » du signal de mesure de production d'électricité « $P_{GMT}(t)$ » ($PPMS_{GMT}$) sur un sous-ensemble de l'ensemble de valeurs de mesure de production d'électricité « $P_i(t_0)$ » à « $P_i(t_n)$ » ($SPPMV_{SS}$) et <ii> ce qui concerne une partie relative au « temps de bonne concordance » du signal de mesure d'irradiation « (t) » ($IMS_{GMT}$) sur un sous-ensemble de l'ensemble de valeurs de mesure d'irradiation « I($t_0$) » à « I($t_n$) » ($SIMV_{SS}$ pour générer (grt), selon un signal de mesure de production d'électricité estimé « $P_{est}(t, K)$ » ($PPMS_{est}$) défini comme étant une fonction « f(I(t),K) » avec « $P_{est}(t, K) = f(I(t), K = [k_0, k_1, ...])$ », un ensemble de paramètres « K » (PMS) ayant au moins un paramètre « [$k_0$, $k_1$, ...] » (PM), dans lequel, lors du lancement (rn) de l'algorithme d'ajustement (FA), un écart entre le signal de mesure de production d'électricité « P(t) » (PPMS) et le signal de mesure de production d'électricité estimé « $P_{est}(t, K)$ » ($PPMS_{est}$) est minimisé par l'affinage ou le changement de l'ensemble de paramètres « K » (PMS),

c) calculer (clc), pendant la période d'enregistrement « [$t_0$ à $t_n$] » sur la base <1> de l'ensemble de valeurs de mesure de production d' électricité « P($t_0$) » à « P($t_n$) » (SPPMV), <2> de l'ensemble de valeurs de mesure d'irradiation « I($t_0$) » à « I($t_n$) » (SIMV) et <3> de l'ensemble de paramètres « K » (PMS) généré ayant l'au moins un paramètre « [$k_0$, $k_1$, ...] » (PM),

le signal de mesure de production d'électricité estimé « $P_{est}$(t, K) » (PPMS$_{est}$) afin de déterminer (dtm) une valeur pour une perte d'énergie (E$_{loss}$) par un calcul d'intégrale (ITC) d'une différence d'électricité (PD)

$$\int [P_{est}(t, K) - P(t)]dt.$$

**7.** Outil mis en œuvre par ordinateur (CIT) selon la revendication 6, **caractérisé en ce que**

le moteur d'équilibrage en énergie (EBE) est conçu de sorte que l'algorithme de mise en concordance de courbes (CMA) pour identifier (idf) l'au moins un temps de bonne concordance (GMT) soit à base itérative, dans lequel les étapes primaires suivantes « S1$_p$ » à « S6$_p$» de l'algorithme de mise en concordance de courbes (CMA) sont effectuées, dans lequel les étapes « S3$_p$ » à « S5$_p$ » sont réalisées de manière itérative
« S1$_p$ » : Apporter, à l'algorithme de mise en concordance de courbes (CMA), le signal de mesure de production d'électricité « P(t) » (PPMS) ayant l'ensemble de valeurs de mesure de production d'électricité « P($t_0$) » à « P($t_n$) » (SPPMV) et le signal de mesure d'irradiation « I(t) » (IMS) ayant l'ensemble de valeurs de mesure d'irradiation « I($t_0$) » à « I($t_n$) » (SIMV), « S2$_p$ » : Établir un ensemble de candidats pour une bonne concordance (CS$_{GM}$) avec la période d'enregistrement « [$t_0$ à $t_n$] » « S3$_p$ » : Calculer un facteur de redimensionnement « s » (SF) par la résolution d'un premier problème d'optimisation (OPP1) dans

$$\min_{s} \sum_{t \,\in\, ensemble\ de\ candidats} \left(P(t) - sI(t)\right)^2,$$

« S4$_p$ » : Inclure des points temporels dans l'ensemble de candidats pour une bonne concordance (CS$_{GM}$), dans lequel tous les critères suivants entre une valeur « P(t) » et une valeur « sI(t) » pour « t » dans la période d'enregistrement « [$t_0$ à $t_n$] » sont satisfaits

- un écart entre les valeurs est inférieur à une première valeur seuil (THV1)
- une différence des variabilités des valeurs est inférieure à une deuxième valeur seuil (THV2),

« S5$_p$ » : Revenir à l'étape primaire « S3$_p$ » jusqu'à ce que l'ensemble de candidats pour une bonne concordance (CS$_{GM}$) reste inchangé selon les étapes primaires « S4$_p$ »,
« S6$_p$ » : Délivrer en sortie l'au moins un temps de bonne concordance (GMT) correspondant à l'ensemble de candidats (CS$_{GM}$) après la dernière itération de l'étape primaire « S5$_p$ ».

**8.** Outil mis en œuvre par ordinateur (CIT) selon la revendication 6 ou 7, **caractérisé en ce que**

l'algorithme d'ajustement (FA) est un algorithme d'ajustement des moindres carrés robuste (RLSFA) et le moteur d'équilibrage en énergie (EBE) est conçu de sorte que l'algorithme d'ajustement des moindres carrés robuste (RLSFA) pour générer (grt) l'ensemble de paramètres « K » (PMS) avec l'au moins un paramètre « [$k_0$, $k_1$, ...] » (PM) soit à base itérative, dans lequel les étapes secondaires suivantes « S1$_s$ » à « S5$_s$» de l'algorithme d'ajustement des moindres carrés robuste (RLSFA) sont effectuées, dans lequel les étapes « S2$_s$ » à « S4$_s$ » sont réalisées de manière itérative
« S1$_s$ » : Apporter, à l'algorithme d'ajustement des moindres carrés robuste (RLSFA), la partie relative au « temps de bonne concordance » du signal de mesure de production d'électricité « P$_{GMT}$ (t) » (PPMS$_{GMT}$) ayant le sous-ensemble de l'ensemble de valeurs de mesure de production d'électricité « P($t_0$) » à « P($t_n$) » (SPPMV$_{SS}$) et la partie relative au « temps de bonne concordance » du signal de mesure d'irradiation « I$_{GMT}$(t) » (IMS$_{GMT}$) sur le sous-ensemble de l'ensemble de valeurs de mesure d'irradiation « I($t_0$) » à « I($t_n$) » (SIMV$_{SS}$),
« S2$_s$ » : Calculer un ensemble de paramètres supplémentaire « K* » (PMS') par la résolution d'un deuxième problème d'optimisation (OPP2) dans

$$K^* = \underset{K^*}{\arg\min} \sum_{t \in temps\ de\ bonne\ concordance} \left(P(t) - P_{est}(t, K^*)\right)^2,$$

dans lequel $P_{est}$ est une fonction du temps « t » et de l'ensemble de paramètres supplémentaire « K* » (PMS') avec $P_{est}(t, K^*) = f(I(t), K^*)$ »

« S3$_s$ » : Utiliser l'ensemble de paramètres supplémentaire « K* » (PMS') pour calculer un ensemble d'écarts quadratiques (SQD) comme étant $[(P(t) - P_{est}(t,K^*))^2 ...]$ pour tous les « t∈ temps de bonne concordance ». Éliminer une part en pourcentage des temps, par ex. 10 %, des temps de bonne concordance correspondant aux valeurs les plus élevées dans l'ensemble d'écarts quadratiques (SQD),

« S4$_s$ » : Passer à l'étape secondaire « S2$_s$ » jusqu'à ce qu'un nombre spécifié d'itérations, par ex., 3 itérations, soit atteint,

« S5$_s$ » : Délivrer en sortie l'ensemble de paramètres « K » (PMS) correspondant à l'ensemble de paramètres supplémentaire « K* » (PMS') après la dernière itération de l'étape secondaire « S4$_s$ ».

9. Outil mis en œuvre par ordinateur (CIT) selon la revendication 6, 7 ou 8, **caractérisé en ce que**
la fonction « f(I(t),K) » avec K = [$k_0$, $k_1$, ...] pour le signal de mesure de production d'électricité estimé « $P_{est}$ (t, K) » (PPMS$_{est}$) est calculée par une fonction linéaire « $P_{est}$ (t, $k_0$) = I(t) » ou une fonction quadratique « $P_{est}$ (t, $k_0$, $k_1$) = $k_0$ I(t) + $k_1$ I(t)$^2$ ».

10. Outil mis en œuvre par ordinateur (CIT) selon l'une des revendications 1 à 4, **caractérisé en ce que**
le moteur d'équilibrage en énergie (EBE) est conçu de sorte qu'une information de commande (CINF) soit générée et utilisée pour commander des réductions d'impacts concernant la perte d'énergie ($E_{loss}$) calculée sur la centrale électrique solaire (SPP).

11. Dispositif de commande de centrale électrique (PPCD) pour un équilibrage en énergie de centrales électriques solaires avec une unité de commande (CU) connectée à une centrale électrique solaire (SPP, INV, PVS, MDV) pour la commande de la centrale électrique solaire (SPP), en particulier pour adapter des points de consigne de la centrale ou pour optimiser un calendrier d'entretien,
**caractérisé par**
un outil mis en œuvre par ordinateur (CIT) selon l'une des revendications 6 à 10, soit qui est mis en œuvre comme une sous-unité dans l'unité de commande (CU), soit qui forme une unité fonctionnelle (FTU) avec l'unité de commande (CU), en particulier de sorte que l'outil mis en œuvre par ordinateur (CIT) soit apte à être chargé dans l'unité de commande (CU) ou forme soit une plate-forme centralisée en nuage pour le dispositif de commande de centrale électrique (PPCD), soit une plate-forme décentralisée pour le dispositif de commande de centrale électrique (PPCD), pour la réalisation du procédé selon l'une des revendications 1 à 5.

12. Système de centrale électrique solaire (SPPS) incluant une centrale électrique solaire (SPP, INV, PVS, MDV), qui est commandée, en particulier pour adapter des points de consigne de la centrale ou pour optimiser un calendrier d'entretien de la centrale,
**caractérisé par**
un dispositif de commande de centrale électrique (PPCD) pour un équilibrage en énergie de centrales électriques solaires selon la revendication 11, qui, au cours de la commande de la centrale électrique solaire (SPP, INV, PVS, MDV), est connecté à la centrale électrique solaire (SPP, INV, PVS, MDV) et conçu de sorte que le procédé mis en œuvre par ordinateur selon l'une des revendications 1 à 5 soit réalisé.

# FIG 1

# FIG 2

Figure 2: Block diagram showing a solar power plant system (SPPS) comprising a Solar Power Plant (SPP) with Inverters, Photo Voltaic Strings, Measurement Devices etc.; a Power Plant Control Device (PPCD) with a Power Plant Interface (PPIF) and a Control Unit (CU); a Computer-implemented Tool (CIT / FTU) with Storage Medium (STM), Program Module (PGM), and Processor (PRC) including CMA (mtc, idf), FA, RLSFA (rn, grt), ITC (clc, dtm); and a Database (DB), e.g. data cloud. Signals include PPMS, PPMS_GMT, Power P, INV, PVS, MDV, IMS, IMS_GMT, Irradiation I, SIMV, SIMV_SS, SPPMV, SPPMV_SS, E_loss, E_loss (PD), PMS, "P_est(t,K)", "K", PPMS_est, GMT, (MSD), PMS, PMS', PM, EBE, CINF.

**FIG 3**

| FIG 3A |
|--------|
| FIG 3B |

**FIG 3A**

"$t \in [t_0$ to $t_n]$" with $n \in \mathbb{N}_0$

**MM**

Collecting by measuring (i) an irradiation measurement signal "$I(t)$" IMS, a set of irradiation measurement values "$I(t_0)$" to "$I(t_n)$" SIMV and (ii) a power production measurement signal "$P(t)$" PPMS a set of power product measurement values "$P(t_0)$" to "$P(t_n)$" SPPMV

clt

IMS, PPMS — SIMV, SPPMV

Database, e.g. data cloud — DB

EBE

IMS, PPMS — SIMV, SPPMV

mtc, idf

"$t \in [t_0$ to $t_n]$" ($t \in$ canditate set)

**CMA**

Match "$P(t)$" to "$I(t)$" using a curve matching algorithm to identify according to a minimum signal distance MSD times with good matches by carrying out primary steps "$S1_p$" to "$S6_p$" with:

"$S1_p$": "$P(t)$", "$I(t)$"

"$S2_p$": Setting a candidate set for good matching $CS_{GM}$

"$S3_p$": Calculating a scaling factor "$s$" SF by solving a first optimization problem OPP1

"$S3_p$ to $S5_p$": Iteratively checking $CS_{GM}$ satisfaction for amended P(t)- and s·I(t)- values with respect to threshold values THV1, THV2

"$S6_p$": Output of GMT

$IMS_{GMT}$, $PPMS_{GMT}$ — $SIMV_{SS}$, $SPPMV_{SS}$

GMT

EP 4 372 948 B1

# FIG 3B

Run for "$P_{GMT}(t)$" and "$I_{GMT}(t)$", a fitting algorithm e.g. a robust least squares fit algorithm, on the identified at least one good matching time GMT to generate at least one parameter set "K" PMS and calculate with the generated parameter set an estimated power production measurement signal "$P_{est}(t,K)=f(I(t), K$", $PPMS_{est}$ by carrying out secondary steps "$S1_S$ to $S5_S$" with:

"$S1_S$": "$P_{GMT}(t)$", "$I_{GMT}(t)$"

"$S2_S$": Calculating a further parameter set. "K*" PMS' by solving a second optimization problem OPP2

"$S2_S$ to $S4_S$": Iteratively, e.g: with 3 iterations, using the further parameter set "K*" PMS' to calculate a set of quadratic deviations SQD and eliminate highest values of SQD

"$S5_S$": Output of the parameter set "K" PMS

"t ∈ good matching times"

rn, grt, clc

FA, RLSFA

$PPMS_{est}$ → "$P_{est}(t, K)$"

PMS → "K"

Database, e.g. data cloud — DB

$PPMS_{est}$ → $P_{est}(t, K)$

dtm

Determine an energy loss $E_{loss}$ by integral calculation of a power difference "$P(t)-P_{est}(t, K)$" PD — ITC

EBE

EP 4 372 948 B1

# FIG 4

# FIG 5